# EUROPÄISCHE PATENTSCHRIFT

(11) **EP 4 620 315 B1**
(45) Veröffentlichungstag und Bekanntmachung des Hinweises auf die Patenterteilung: **05.08.2026**
(21) Anmeldenummer: 24164480.6
(22) Anmeldetag: 19.03.2024
(51) Int. Cl.: A22C 7/00

(54) **VORRICHTUNG UND VERFAHREN ZUM HERSTELLEN VON MARMORIERTEN UND STRUKTURIERTEN LEBENSMITTELN, INSBESONDERE FLEISCHERSATZPRODUKTEN**
DEVICE AND METHOD FOR PRODUCING MARBLED AND STRUCTURED FOODSTUFFS, IN PARTICULAR MEAT SUBSTITUTE PRODUCTS
DISPOSITIF ET PROCÉDÉ DE FABRICATION D'ALIMENTS MARBRÉS ET STRUCTURÉS, EN PARTICULIER DE PRODUITS DE SUBSTITUTION DE VIANDE

(43) Veröffentlichungstag der Anmeldung: 24.09.2025
(73) Patentinhaber: Albert Handtmann Maschinenfabrik GmbH & Co. KG, 88400 Biberach (DE)
(72) Erfinder: KAMMERER, Steffen, 88214 Ravensburg (DE); HEMRICH, Leo, 97237 Altertheim (DE)
(74) Vertreter: Grünecker Patent- und Rechtsanwälte PartG mbB

(56) Entgegenhaltungen:
- EP-A1- 0 818 154
- WO-A1-2023/281512
- US-A1- 2023 225 361

## Beschreibung

Die Erfindung betrifft eine Vorrichtung und ein Verfahren zum Herstellen von marmorierten und strukturierten Lebensmitteln gemäß den Ansprüchen 1 und 14.

Bei der Herstellung von Fleisch- und/oder Fleischersatzprodukten werden pastöse, pflanzliche, oft mit Fasern versetzte Massen entweder händisch oder maschinell in Form gebracht und auch entsprechende Strukturen eingebracht. Diese Produkte werden in ihrer Außengeometrie, aber auch ihrem Querschnitt möglichst realitätsgetreu einem rein tierischen Vergleichsprodukt nachempfunden. Diese Vergleichsprodukte weisen neben dem roten Muskelfleisch ebenfalls deutlich sichtbare Fettstrukturen auf.

Diese Fettstrukturen liegen zum einen innerhalb (intramuskuläre Feinmarmorierung), zum anderen aber auch in größeren definierten Strukturen zwischen den Muskelsträngen vor (Grobstrukturierung). Diese groben Strukturen prägen das Bild eines Fleischersatzproduktes maßgeblich und sind unerlässlich, um tierische Vergleichsprodukte realitätstreu zu imitieren.

Die definierten Fettstrukturen repräsentieren bestimmte Teilstücke eines Tieres, z.B. Rumpsteak, Hüfte, Hochrippe, etc. Dabei gilt es die Form, die Stärke, den prozentualen Fettanteil, und damit die gesamte Fleischstruktur nachzuempfinden. US 2023/225361 A1 offenbart eine Vorrichtung zum Erzeugen von Fleischersatzprodukten.

Es werden im Stand der Technik bereits sogenannte Koextrusionsverfahren verwendet, über die gleichzeitig eine Innen- und eine Außenmasse extrudiert werden kann, um beispielsweise Wurstprodukte mit Käsefüllung herzustellen oder veganen Bacon.

Es ist bereits aus der WO 2022/157584 A2 bekannt, eine Zweitmasse in eine zuvor hergestellte faserige Grundmasse einzubringen. Die Grundmasse stellt hier die Fleischersatzmasse dar. Diese wird in einem vorgelagerten Prozess hergestellt. Durch Walzen, Lockern und Marinieren entsteht eine realistisch anmutende Masse. Das Walzprodukt sorgt dafür, dass diese Masse als flache Matte vorliegt. Auf diese flache ausgerollte Grundmasse wird eine Zweitmasse, das heißt die Fettersatzmasse, aufdosiert. Durch anschließendes Aufrollen des flachen Produkts und Eintreten der Zweitmasse in die Zwischenräume der Fasern entsteht ein gemustertes Produktbild. Dieses Querschnittsbild ähnelt z.B. einem realen Rinderfilet mit Marmorierungsstruktur.

Dieses bekannte Herstellverfahren zur Erzeugung veganer Fleischalternativen ermöglicht keinen kontinuierlichen Herstellungsprozess, da manuelle Arbeitsschritte notwendig sind. Insgesamt ist das Herstellverfahren aufwendig und kostenintensiv. Dadurch, dass es sich um einen diskontinuierlichen Prozess handelt, ist die Stundenleistung sehr gering, was wiederum zu hohen Kosten für den Endverbraucher führt. Weiter ist die Bandbreite an verwendbaren Massen sehr eingeschränkt. Eine prozesssichere Anpassung der Verteilung der Zweitmasse über den Produktquerschnitt hinweg ist nur bedingt möglich. Das Gleiche gilt für das Anpassen der Volumenverhältnisse zwischen Grundmasse und Zweitmasse. Insgesamt ist der Prozess kompliziert und aufwendig.

Die bekannten Koextrusionseinrichtungen bringen den Nachteil mit sich, dass keine exakt definierten Strukturen und insbesondere auch keine feinen Strukturen bzw. Marmorierung erzeugt werden können. Anwendungen bekannter Koextrusionsdüsen eignen sich vor allem für die Monoproduktion ganz bestimmter Produkte bei gleichzeitig definierter Beschaffenheit der zu extrudierenden Medien. Eine flexible Anpassung von Strukturen ist nicht möglich.

Hiervon ausgehend liegt der vorliegenden Erfindung die Aufgabe zugrunde, eine verbesserte Vorrichtung und ein verbessertes Verfahren bereitzustellen, die auf einfache kontinuierliche und flexible Art und Weise ermöglichen, grobe und feine Strukturen in einem Lebensmittel zu erzeugen.

Die erfindungsgemäße Vorrichtung zum Herstellen von marmorierten Lebensmitteln, insbesondere Fleischprodukten, umfasst ein Gehäuse mit einem Einlass für einen Grundmassestrom, mehrere Düsen zum Einspritzen mehrerer Zusatzmasseströme in den Grundmassestrom sowie einen Auslass für den marmorierten Grundmassestrom, der eine marmorierte Struktur der pastösen Zusatzmasse in der Grundmasse aufweist.

Die Vorrichtung weist weiter ein zweites Gehäuse auf, mit einem Einlass für den marmorierten Grundmassestrom und einen Auslass für das strukturierte Lebensmittel und mit einer Strukturiereinrichtung zum Erzeugen einer definierten Struktur einer Zusatzmasse in der marmorierten Grundmasse, wobei die Strukturiereinrichtung umfasst: mindestens eine Öffnung für den marmorierten Grundmassestrom zur Erzeugung mindestens eines Grundmassestrangs und mehrere Zuläufe für weitere Zusatzmasseströme zum Erzeugen mehrerer Zusatzmassenstränge.

Die vorliegende Erfindung ermöglicht das Erzeugen einer feinen Marmorierung im ersten Gehäuse in Kombination mit zusätzlichen Strukturen in der marmorierten Grundmasse, die in einem zweiten Gehäuse erzeugt werden.

Die erfindungsgemäße Vorrichtung ermöglicht die kontinuierliche Produktion eines marmorierten und strukturierten Lebensmittels, indem während des Herstellungsprozesses zunächst mehrere Zusatzmasseströme dem erzeugten Grundmassestrom zu dosiert werden können, so dass eine kontinuierliche Produktion möglich ist. Die Grundmasse ist beispielsweise die Fleischersatzmasse. Es ist möglich die Zusatzmasseströme kontinuierlich oder auch gepulst zuzuführen. Somit können mehrere Einzelstränge der Zusatzmasse gekapselt im Grundmassestrom erzeugt werden, so dass ein marmoriertes Muster, d.h. eine marmorierte Struktur der pastösen Zusatzmasse in der Grundmasse auf einfache Art und Weise entsteht. Durch die Bewegung der Grundmasse und der Zusatzmasse im Gehäuse kommt es auch zu einer Auslenkung der Einzelstränge (relativ zur Hauptströmungsrichtung von Einlass zu Auslass), was zu einer ansprechenden naturgetreuen marmorierten Struktur im Lebensmittelquerschnitt führt.

Zum Erzeugen des Grundmassestroms bzw. der Zusatzmasseströme kann der Einlass und der Auslass des ersten Gehäuses mit entsprechenden Füllmaschinen oder Pumpen etc. verbunden werden. Dadurch, dass das Gehäuse mehrere Düsen aufweist, bringt die Vorrichtung ein hohes Maß an Flexibilität, Hygiene und Einfachheit mit. Die erfindungsgemäße Vorrichtung kann schnell und einfach an entsprechenden Füllmaschinen bzw. Pumpeinrichtungen montiert werden. Die verwendeten Komponenten erfüllen auch die anspruchsvollen Hygieneanforderungen in der Lebensmitteltechnik und ermöglichen eine einfache Reinigung bei gleichzeitiger Robustheit. Durch die initiale Einspritzung des Zusatzmassestroms in den Grundmassestrom resultiert zur Herstellung der Marmorierungsstruktur nur eine geringe mechanische Belastung der Produkte.

In diese marmorierte Grundmasse wird nun eine weitere Struktur eingebracht. Ein zweites Gehäuse ist in Strömungsrichtung nach dem ersten Gehäuse vorgesehen. Es weist einen Einlass für den marmorierten Grundmassestrom auf.

Das zweite Gehäuse weist eine Strukturiereinrichtung auf zum Erzeugen einer definierten Struktur einer weiteren Zusatzmasse in der Grundmasse. Die weiteren Zusatzmasse kann entweder die gleiche Masse wie die Zusatzmasse, die dem ersten Gehäuse zugeführt wurde sein oder aber eine andere Masse. Die Strukturiereinrichtung umfasst mindestens eine Öffnung für den Grundmassestrom zur Erzeugung mindestens eines Grundmassestrangs. Das heißt, dass der Grundmassestrom entweder als Einzelstrom belassen wird oder aber in mehrere Teilströme unterteilt wird, derart, dass mehrere Grundmassestränge erzeugt werden, die im Querschnitt des zweiten Gehäuses betrachtet, voneinander beabstandet sind. Ferner sind mehrere Zuläufe vorgesehen für die zuvor genannten Zusatzmasse-Ströme zum Erzeugen mehrere Zusatzmassestränge. Es gibt also mehrere Zusatzmassestränge, die im Querschnitt des zweiten Gehäuses betrachtet voneinander beanstandet sind. Die Grundmassestränge und die Zusatzmassestränge liegen also nebeneinander, gegebenenfalls durch einen Hohlraum voneinander getrennt. Es gibt also im zweiten Gehäuse mehrere Einzelstränge aus Grundmasse und Zusatzmasse, die sich aneinanderlegen können, um so das strukturierte Fleischersatzprodukt zu bilden. Sowohl der mindestens eine erzeugte Grundmassestrang als auch die Zusatzmassestränge bewegen sich in Strömungsrichtung, d.h. in Richtung Auslass des Gehäuses.

Durch die Marmorierung und die weitere Strukturierung kann somit kontinuierlich ein realitätsgetreues Fleischersatzprodukt erzeugt werden.

Das erste und zweite Gehäuse können auch in einem gemeinsamen Gehäuse integriert sein und sind dann in Form von hintereinander angeordneten Gehäuseabschnitten ausgebildet.

Erfindungsgemäss umfasst die Strukturiereinrichtung einen ersten Abschnitt mit mindestens einer Öffnung für den Grundmassestrom zur Erzeugung mindestens eines Grundmassestrangs. Das heißt, dass der Grundmassestrom entweder als Einzelstrom belassen wird oder aber in mehrere Teilströme unterteilt wird, derart, dass mehrere Grundmassestränge erzeugt werden, die im Querschnitt des Gehäuses betrachtet, voneinander beabstandet sind.

Weiter weist die Strukturiereinrichtung einen zweiten Abschnitt auf mit mehreren Kanälen, die mit Zuläufen für jeweilige Zusatzmasseströme verbunden sind. Dabei sind die Zuläufe insbesondere um den Umfang des Gehäuses herum verteilt angeordnet. So kann der Zusatzmassestrom an jeweilige vorbestimmte Positionen des Gehäusequerschnitts über die Kanäle geleitet werden. Diese Positionen befinden sich außerhalb des Grundmassestrangs oder der Grundmassestränge.

Weiter umfasst die Strukturiereinrichtung einen dritten Abschnitt mit mehreren Auslassöffnungen, die in Verbindung mit jeweiligen Kanälen stehen, um mehrere Zusatzmassestränge zu erzeugen. Das heißt, dass die Zusatzmasse über die vorbestimmten Positionen über die jeweiligen Auslassöffnungen austritt und die jeweiligen Zusatzmassestränge erzeugt. Die Auslassöffnungen liegen vorzugsweise in einer Ebene, die sich senkrecht zur Strömungsrichtung in der Strukturiereinrichtung erstreckt.

Durch Wahl der Positionen der Kanäle sowie der Auslassöffnungen und der Position der Öffnung oder der Öffnungen für den Grundmassestrom kann eine beliebige Struktur auf einfache Art und Weise erzeugt werden. Eine entsprechende Vorrichtung ist robust und einfach und kostengünstig zu fertigen.

Gemäß einem bevorzugten Ausführungsbeispiel ist ein vierter Abschnitt vorgesehen mit mehreren Öffnungen, über die die Zusatzmassestränge rekombiniert werden können, so dass eine definierte Gesamtstruktur entsteht. Je nach Produkt kann auf die Verwendung eines vierten Abschnitts auch verzichtet werden. Dann können die Grund- und Zusatzmassestränge direkt an der Austrittsfläche des dritten Abschnitts mittels einer nicht gezeigten Trenneinrichtung abgetrennt werden, sodass beispielsweise Produkte entstehen, die Speckwürfeln nachgebildet sind.

Gemäß einer bevorzugten Ausführungsform weist das zweite Gehäuse nach der Strukturiereinrichtung also insbesondere nach dem dritten oder vierten Abschnitt eine Extrusionsführung auf, in der sich die Grund- und Zusatzmassestränge aneinander legen, d.h., dass die Grund- und Zusatzmasse ohne Lufteinschlüsse zusammengefügt werden. Die Innenkontur der Extrusionsführung entspricht im Wesentlichen der Außenkontur des Lebensmittels, hat z.B. die Form eines Steaks. Die Extrusionsführung kann entweder als gerade Formstrecke mit im Wesentlichen konstanter Querschnittsfläche im Inneren ausgebildet sein oder als komprimierende Formstrecke derart, dass das Lebensmittel nach dem Austritt aus der Strukturiereinrichtung, d.h. insbesondere dem dritten oder vierten Abschnitt komprimiert wird, d.h., leicht verjüngt wird. In diesem Fall nimmt die Querschnittsfläche im Inneren der Extrusionsführung z.B. ab. Eine komprimierende Formstrecke kann zur besseren Anhaftung der unterschiedlichen Produktphasen, d.h. der Grundmasse und der Zusatzmasse, führen. Abhängig vom Produkt kann auch auf eine entsprechende Extrusionsführung verzichtet werden, insbesondere dann, wenn das Lebensmittel in eine Darmhülle, z.B. Kunstdarmhülle, extrudiert wird. Dann werden die einzelnen Stränge in der Darmhülle komprimiert.

Die Extrusionsführung kann sich zum Auslass hin auch erweitern, sodass der Druck im erzeugten Lebensmittelprodukt abnimmt.

Das extrudierte Lebensmittel kann anschließend einem Förderband, einer Abfüllvorrichtung für Wursthüllen, beispielsweise Kunstdarmhüllen oder einem Portioniersystem übergeben werden. Auch ein händisches Portionieren und Entnehmen ist möglich. Das Lebensmittel kann dann auch beispielsweise in einzelne Scheiben geschnitten werden.

Gemäß einem bevorzugten Ausführungsbeispiel sind die Abschnitte in Form von mehreren aneinander liegenden in Strömungsrichtung hintereinanderliegend angeordneten Platten ausgebildet. Dabei kann jeder Abschnitt in einer eigenen Platte realisiert sein oder aber auch mehrere Abschnitte in einer Platte integriert sein, z.B. der erste und zweite Abschnitt in einer Platte oder der zweite und dritte Abschnitt in einer Platte. Alternativ dazu kann statt der einzelnen Platten ein einzelnes, beispielsweise 3D-gedrucktes Bauteil als Strukturiereinrichtung, mit den innenliegenden Kanälen und Öffnungen für den mindestens einen Grundmassestrom sowie die mehreren Zusatzmasseströmen verwendet werden.

Der Einsatz von mehreren Platten ist aber besonders vorteilhaft, da über den Plattenaufbau kundenspezifische Strukturwünsche mit simplen Bauteilen kostengünstig realisiert werden können. Dazu sind die Platten vorzugsweise austauschbar im Gehäuse angeordnet. Somit können auf einfache Art und Weise kundenspezifische Lösungen realisiert werden, ohne große Umbaumaßnahmen. Somit können neue Strukturen durch alleiniges Austauschen weniger Komponenten erzeugt werden. Die Positionen der Zuläufe der Zusatzmasse bleiben dabei gleich.

Gemäß einer bevorzugten Ausführungsform ragen die Düsen derart in das erste Gehäuse hinein, dass die Zusatzmasseströme in den Grundmassestrom an unterschiedlichen Stellen einbringbar sind, wobei die Düsen insbesondere unterschiedlich tief und / oder von unterschiedlichen Seiten des Gehäuses in das Gehäuse hineinragen. Somit werden die Zusatzmasseströme in den Grundmassestrom an unterschiedlichen Stellen im Querschnitt betrachtet eingespritzt und es kann ein gewünschtes Muster erzeugt werden. Die Düsen werden vorzugsweise vom Grundmassestrom umströmt was zu einer Verwirbelung des Grundmassestroms und des Zusatzmassestroms führt.

Gemäß einem bevorzugten Ausführungsbeispiel weist die Vorrichtung einen statischen und/oder einen dynamischen Mischer auf, der vorzugsweise in Strömungsrichtung T des Grundmassestroms stromabwärts den Düsen angeordnet ist, um die Zusatzmasseströme zu verwirbeln. Durch diese Verwirbelung der zuvor eingespritzten Zusatzmasseströme entsteht eine unregelmäßige, feinteilige Struktur, die über den ganzen Produktquerschnitt gleichmäßig verwirbelt wird. Dabei kann bereits mit nur geringfügiger mechanischer Belastung, d.h. mit einer niedrigen Mischerdrehzahl, eine hohe Verwirbelung erzeugt werden. Alternativ oder zusätzlich kann auch ein statischer Mischer verwendet werden, der z. B. über Strömungsbrecher realisiert wird oder z. B. als Drallrohr ausgebildet ist, etc.. Wesentlich ist, dass eine zusätzliche Verwirbelung realisiert wird. Statische Mischer sind einfacher und kostengünstiger zu realisieren. Dynamische Mischer haben den Vorteil, dass durch Einstellen der Drehzahl und / oder durch Auswahl der Flügelgeometrie das Aussehen der marmorierten Struktur gezielt beeinflusst werden kann.

Vorteilhafterweise kann also die Mischerdrehzahl des dynamischen Mischers variiert werden, so dass hier die gewünschte marmorierte Struktur optimiert werden kann. Darüber hinaus kann durch Einstellen der Drehzahl die Belastung auf die Grund- und Zusatzmasse angepasst werden. Weiter kann verhindert werden, dass für bestimmte Produkte eine massenspezifische Drehzahl überschritten wird, bei der die Produktphasen emulgieren würden.

Vorzugsweise gibt es 2 bis 24 Düsen. Aber auch eine Düse ist möglich. Sollten Düsenaufnahmen vorgesehen sein, in die die Düsen an gewünschten Stellen eingebracht werden können, so können mindestens eine, insbesondere 2 bis 24 Düsenaufnahmen ausgebildet sein. Die Düsen haben vorzugsweise eine Auslassfläche von 0,2 - 25 mm², so dass auch sehr feine Strukturen erzeugt werden können. Die Düsen können entweder gleich große Auslassfläche aufweisen oder unterschiedlich große Auslassflächen.

In der Strukturiereinrichtung im zweiten Gehäuse weist die mindestens eine Öffnung zur Erzeugung des mindestens einen Grundmassestrangs jeweils eine Querschnittsfläche auf, die größer ist als die Querschnittsfläche der jeweiligen Auslassöffnungen zur Erzeugung eines Zusatzmassestrangs und insbesondere sind die Querschnittsflächen der jeweiligen Auslassöffnungen zur Erzeugung eines Zusatzmassestrangs größer ist als die Auslassfläche der jeweiligen Düsen im ersten Gehäuse.

Somit ist es möglich über die Düsen im ersten Gehäuse eine Feinstrukturierung, d. h. eine Marmorierung vorzunehmen, die zum Beispiel einer natürlichen Marmorierung von Muskelfleisch entspricht. Im zweiten Gehäuse kann dann über die Strukturiereinrichtung aus dem marmorierten Grundmassestrom entweder ein marmorierter Einzelstrang oder mehrere Grundmassestränge erzeugt werden und daneben mehrere Zusatzmassestränge die im fertigen Lebensmittelprodukt die Grundmasse, z.B. als fettähnliche Masse durchziehen.

Die mindestens eine Öffnung zur Erzeugung des mindestens eines Grundmassestrangs hat jeweils eine Querschnittsfläche in einem Bereich von 3 bis 400 cm² aufweist und die Kanäle haben vorzugsweise eine Querschnittsfläche in einem Bereich von 5 bis 150 mm².

Dies sind nur bevorzugte Ausführungsformen, wobei die erfindungsgemäße Vorrichtung jede Design Freiheit ermöglicht.

Die Vorrichtung umfasst gemäß einem bevorzugten Ausführungsbeispiel mindestens eine Einrichtung zum Zuführen der Zusatzmasseströme für das 1. und/oder 2. Gehäuse. Dabei kann zum Beispiel eine gemeinsame Einrichtung für das 1. und 2. Gehäuse vorgesehen sein, d. h. dass den Gehäusen die gleiche Masse als Zusatzmasse zugeführt wird. Es können aber auch zum Beispiel zwei verschiedene Einrichtungen zum Zuführen der Zusatzmasseströme vorgesehen sein- dann können unterschiedliche Massen zugeführt werden. Als Einrichtung(en) sind zum Beispiel Füllmaschinen geeignet.

Gemäß einem bevorzugten Ausführungsbeispiel weist die Einrichtung oder die Einrichtungen zum Zuführen der Zusatzmasseströme jeweils mindestens einen Füllstromteiler auf, der einen Zusatzmassestrom in mehrere Zusatzmasseströme in entsprechenden Teilleitungen aufteilt, wobei die Teilleitungen mit den Düsen und/oder den Zuläufen verbunden sind. Es ist möglich, dass eine Einrichtung vorgesehen ist, die zum Beispiel 2 Füllstromteiler aufweist, wobei ein Füllstromteiler mit den Düsen verbunden ist und der andere Füllstromteiler mit den Zuläufen im zweiten Gehäuse. Dann kann der Volumenstrom entsprechend eingestellt werden.

Die Verwendung eines Füllstromteilers ermöglicht, dass die einzelnen Zusatzmasseströme jeweils den gleichen Volumenstrom aufweisen können, unabhängig davon, wo die Düse oder der Zulauf am entsprechenden Gehäuse angeordnet ist. Hierdurch ist die Zusatzmasse z.B. in den Kanälen oder Düsen mit unterschiedlichen Strömungswiderständen zwangsgeführt und weist je Kanal oder Düse einen definierten über alle Kanäle oder Düsen hinweg gleichbleibenden Volumenstrom auf. Dadurch ist das System massenunabhängig - die Strukturinjektion wird durch unterschiedliche Fließeigenschaften und Viskositäten der verwendeten pastösen Massen nicht beeinflusst. Damit bedarf es beim Wechsel der Massen keine Anpassung des Systems durch den Bediener. Auf die Verwendung eines Füllstromteilers kann dann verzichtet werden, wenn die Geometrie der einzelnen Kanäle so definiert ist, dass die Strömungswiderstände über alle Kanäle hinweg nahezu identisch sind. Dies kann über eine simulative Untersuchung erreicht werden oder über entsprechende Drosselventile an oder vor den jeweiligen Zuläufen. Die Verwendung eines Füllstromteilers erlaubt jedenfalls eine größere Freiheit bei der Auslegung der Kanäle und Düsen und der dadurch erzeugten Strukturen.

Die Erfindung betrifft auch eine Füllmaschine mit einer Vorrichtung zum Herstellen von marmorierten und strukturierten Lebensmitteln nach mindestens einem der Ansprüche 1-10, wobei die Füllmaschine einen Trichter, ein Förderwerk und einen Auslass, der mit dem Einlass des ersten Gehäuses verbunden ist, aufweist.

Gemäß einem bevorzugten Ausführungsbeispiel ist das Verhältnis des Grundmassestroms, der dem ersten Gehäuse zugeführt wird, zu den jeweiligen Zusatzmasseströmen, die den Düsen im ersten Gehäuse zugeführt werden, einstellbar und insbesondere das Verhältnis des Grundmassestroms, der dem ersten Gehäuse zugeführt wird zu den jeweiligen Zusatzmasseströmen, die den Zuführungen im zweiten Gehäuse zugeführt werden einstellbar. Somit kann ideal eine gewünschte Marmorierung und eine gewünschte Struktur erzeugt werden.

Bei dem erfindungsgemäßen Verfahren gemäss Anspruch 13 zum Herstellen von marmorierten strukturierten Lebensmitteln, insbesondere mit einer Füllmaschine nach Anspruch 11 oder 12, wird ein Grundmassestrom durch ein erstes Gehäuse erzeugt, zum Beispiel über die Füllmaschine.

In den Grundmassestrom werden mehrere Zusatzmasseströme über jeweilige Düsen eingespritzt um so einen marmorierten Grundmassestrom zu erzeugen.

Der mit den Zusatzmasseströmen marmorierte Grundmassestrom wird in ein zweites Gehäuse geleitet und in einer Strukturiereinrichtung im zweiten Gehäuse wird dieser Grundmassestrom durch mindestens eine Öffnung geführt, wodurch mindestens ein Grundmassestrang erzeugt wird und weitere Zusatzmasseströme werden über mehrere Zuläufe im zweiten Gehäuse zugeführt wodurch mehrere Zusatzmassestränge erzeugt werden. Die Stränge können sich dann aneinander fügen um das Lebensmittel mit der gewünschten Struktur zu erzeugen.

Dazu können sich in Strömungsrichtung betrachtet nach der Strukturiereinrichtung die Grund-und Zusatzmassestränge in einer Extrusionsführung aneinanderlegen.

Die vorliegende Erfindung wird anhand der nachfolgenden Figuren näher erläutert.
- Figur 1: zeigt grob schematisch eine Ausführungsform gemäß der vorliegenden Erfindung.
- Figur 2: zeigt grob schematisch einen Querschnitt durch einen Teil einer Ausführungsform gemäß der vorliegenden Erfindung.
- Figur 3: zeigt schematisch eine Aufsicht auf einen Teil einer Ausführungsform gemäß der vorliegenden Erfindung.
- Figur 4: zeigt schematisch eine perspektivische Darstellung eines Teils eines Ausführungsbeispiels gemäß der vorliegenden Erfindung.
- Figur 5: zeigt grob schematisch zwei Füllmaschinen mit einer Vorrichtung gemäß einem Ausführungsbeispiel der vorliegenden Erfindung.
- Figur 6: zeigt schematisch einen Längsschnitt durch einen Teil eines Ausführungsbeispiels gemäß der vorliegenden Erfindung.
- Figur 7: zeigt eine Explosionsdarstellung des Plattenaufbaus der Strukturiereinrichtung gemäß dem in Figur 6 gezeigten Ausführungsbeispiel.
- Figur 8: zeigt schematisch jeweils einen Längsschnitt und eine Aufsicht auf die unterschiedlichen Platten gemäß dem in Figur 2 und 3 gezeigtem Ausführungsbeispiel.
- Figur 9: zeigt die Draufsicht auf die Vorrichtung bei Austritt der Grundmassestränge und Zusatzmassenstränge vor Eintritt in die Extrusionsführung gemäß dem in den Figuren 6-8 gezeigten Ausführungsbeispiel.
- Figur 10: zeigt einen Schnitt des in Figuren 6-9 gezeigten Ausführungsbeispiels in perspektivischer Darstellung.
- Figur 11: zeigt das mit dem zuvor beschriebenen Ausführungsbeispiel erzeugte Lebensmittel.

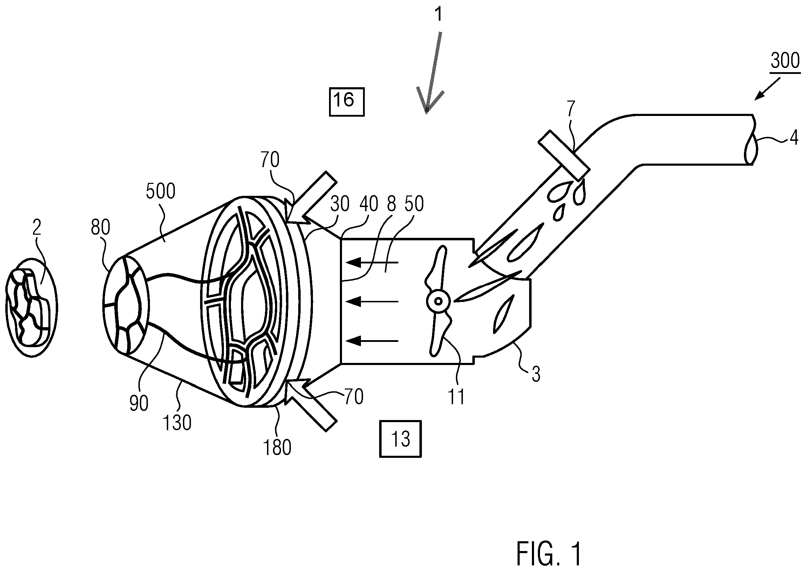

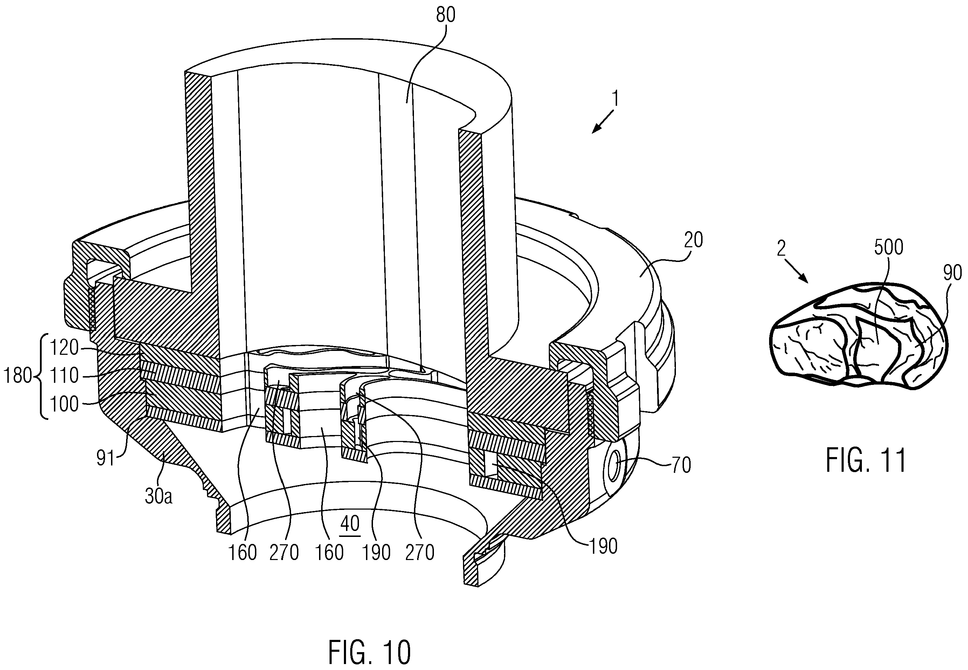

Figur 1 zeigt grob schematisch eine Ausführungsform gemäß der vorliegenden Erfindung zum Herstellen von marmorierten und strukturierten Lebensmitteln 2, insbesondere Fleischersatzprodukten. Diese Produkte werden in ihrer Außengeometrie, aber auch ihrem Querschnitt möglichst realitätsgetreu dem tierischen Vergleichsprodukt nachempfunden. Diese Vergleichsprodukte weisen neben dem marmorierten roten Muskelfleisch ebenfalls deutlich sichtbare gröbere Fettstrukturen auf. Fig. 11 zeigt schematisch die Struktur eines solchen Fleischersatzproduktes mit einer marmoriertes Grundmasse 500, die dem Muskelfleisch entspricht und einer Zusatzmasse 90, die einer groben Fettstruktur entspricht.

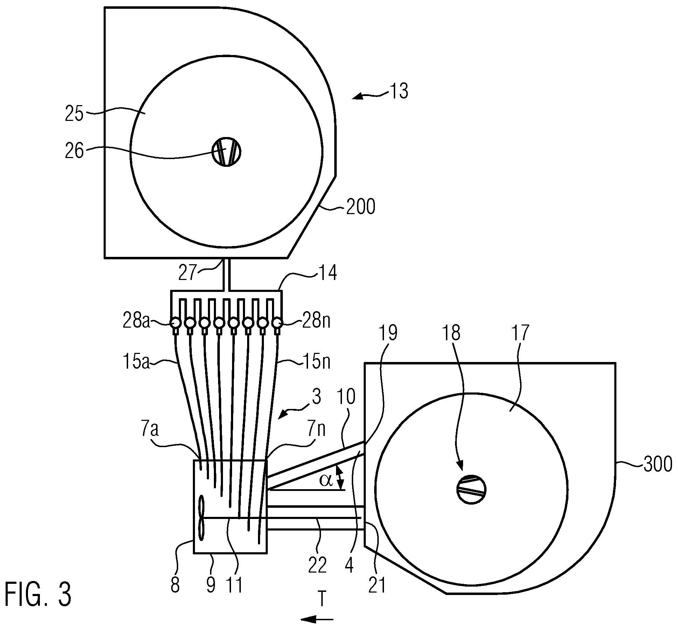

Die Vorrichtung 1 weist ein erstes Gehäuse 3 auf mit einem Einlass 4 für einen Grundmassestrom 5, der beispielsweise von einer Füllmaschine 300 erzeugt wird, und mindestens eine, insbesondere mehrere Düsen 7 zum Einspritzen mehrerer Zusatzmasseströme 6 in den Grundmassestrom. Das Gehäuse weist weiter einen Auslass 8 für den Grundmassestrom 5, der eine marmorierte Struktur der Zusatzmasse in der Grundmasse aufweist, auf. Die Zusatzmasseströme 6 können beispielsweise ebenfalls von einer Einrichtung 13 zum Zuführen der Zusatzmasse, die insbesondere die Füllmaschine200 (Fig. 3) umfasst, erzeugt werden. Im ersten Gehäuse 3 befindet sich in Strömungsrichtung nach der mindestens einen Düse 7 ein statischer und oder dynamische Mischer 11 zum Verwirbeln des injizierten Zusatzmassestroms 6. An das erste Gehäuse 3 schließt sich ein zweites Gehäuse 30 in Strömungsrichtung an. Hier kann sich zum Beispiel der Umfang des Gehäuses 30 erweitern. Das zweite Gehäuse weist einen Einlass 40 auf, der sich hier an den Auslass 8 des ersten Gehäuses anschließt. Das zweite Gehäuse 30 weist ferner einen Auslass 80 für das strukturierte Lebensmittel 2 auf. Das zweite Gehäuse 30 weist weiter eine Strukturiereinrichtung 180 auf zum Erzeugen einer definierten Struktur einer weiteren Zusatzmasse in der marmorierten Grundmasse. Die Strukturiereinrichtung 180 weist, wie nachfolgend noch näher erläutert wird, mindestens eine Öffnung 160, hier zum Beispiel drei Öffnungen für den marmorierten Grundmassestrom 50 auf um mehrere Grundmassestränge 500 zu erzeugen, indem die Masse durch die Öffnung (en) 160 durchgedrückt wird. Ferner gibt es mehrere Zuläufe 70, die insbesondere um den Umfang des zweiten Gehäuses 30 verteilt angeordnet sind zum Erzeugen mehrerer Zusatzmassestränge 90 im Gehäuse. Die Grundmassestränge 500 und die Zusatzmassestränge 90 liegen nebeneinander vor und können beispielsweise über eine Extrusionsführung 130, wie nachfolgend noch näher erläutert wird, zusammengeführt werden, insbesondere komprimiert werden. Das fertige Lebensmittel wird zum Beispiel über den Auslass 80 des zweiten Gehäuses 30 ausgestoßen, und kann dann entweder weiter transportiert werden und zum Beispiel in Scheiben geschnitten werden oder aber in eine Wursthülle abgefüllt werden.

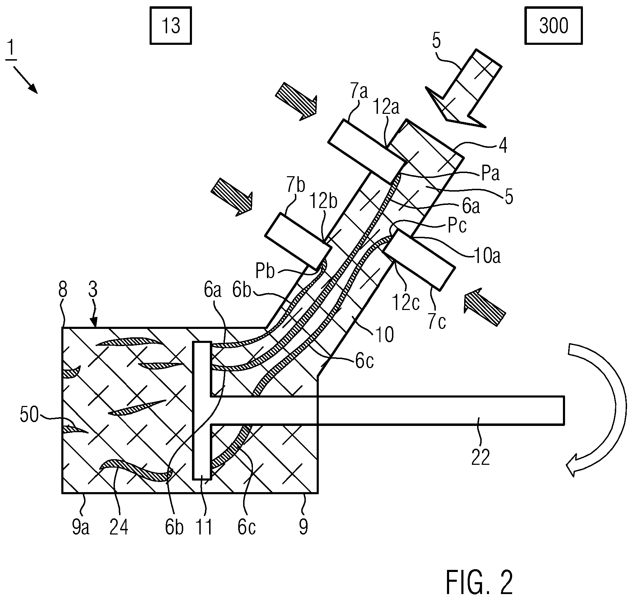

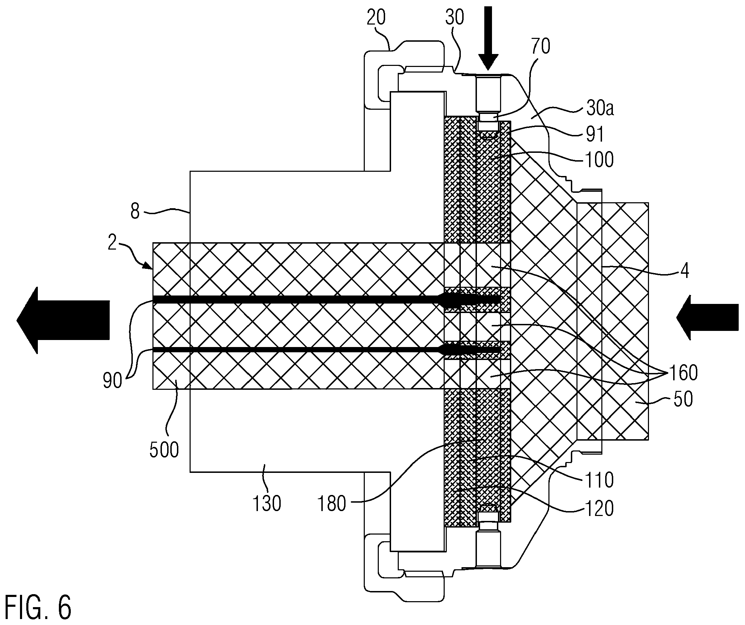

Nachfolgend wird unter Bezugnahme der Figuren 2-5 das erste Gehäuse 3 zum Erzeugen der Marmorierung näher erläutert und anschließend unter Bezugnahme der Figuren 6-10 das 2. Gehäuse 30 zum Erzeugen der gröberen Struktur.

Figur 2 zeigt einen Querschnitt durch das erste Gehäuse 3 gemäß einer Ausführungsform der vorliegenden Erfindung. Die Vorrichtung zum Herstellen eines marmorierten und strukturierten Lebensmittels 2 weist das Gehäuse 3 auf, das hier beispielsweise einen Grundkörper 9 und eine Zulaufleitung 10 aufweist. Dies ist allerdings nur beispielhaft. Das Gehäuse 3 weist einen Einlass 4 für einen Grundmassestrom 5 eines pastösen Lebensmittels auf. Ein entsprechendes Lebensmittel kann beispielsweise eine pastöse Masse, insbesondere Fleischersatzmasse sein. Dieser Einlass 4 kann mit einer Zuführeinrichtung für den Grundmassestrom verbunden sein. Vorteilhafterweise ist der Einlass 4 mit einem Auslass 19 einer Füllmaschine 300, wie sie auch in Figur 2 dargestellt ist, verbunden. Eine solche Füllmaschine wird beispielsweise zur Wurstherstellung verwendet und weist zum Beispiel einen Trichter 17 für die Grundmasse auf und ein Förderwerk 18, zum Beispiel eine Flügelzellenpumpe oder eine Schneckenpumpe, wobei das Förderwerk 18 den Grundmassestrom 5 über den Einlass 4 in das Gehäuse 3 fördert, wie durch den Pfeil in Figur 2 dargestellt ist.

Wie weiter in Figur 2 erkannt werden kann, weist das Gehäuse 3 auch einen Auslass 8 für den marmorierten Grundmassestrom 50 auf. Wenn auch hier nicht dargestellt ist, schließt sich an den Auslass 8 des ersten Gehäuses 3 in Strömungsrichtung das zweite Gehäuse 30 an, das nachfolgend noch näher erläutert wird. Es ist aber auch möglich, dass das erste und zweite Gehäuse 3, 30 in einem gemeinsamen Gehäuse integriert sind. Das Gehäuse 3 weist mehrere Düsen 7a, 7b, 7c auf, die in diesem Ausführungsbeispiel im Bereich der Zulaufleitung 10 des Gehäuses 3 angeordnet sind. Die Düsen dienen zum Zuführen mehrerer Zusatzmasseströme 6a, 6b, 6c. Eine solche Zusatzmasse kann beispielsweise eine pastöse Masse, insbesondere Fettersatzmasse sein.

Hier sind beispielhaft 3 Düsen dargestellt- vorzugsweise gibt es 2 - 24 Düsen. Die Düsen 7a, 7b, 7c ragen in den Grundmassestrom 5 hinein und werden von dem Grundmassestrom 5 umströmt. Die Düsen 7a, 7b und 7c ragen unterschiedlich tief und von unterschiedlichen Seiten in den Grundmassestrom 5. Das heißt, dass die Zusatzmasseströme an unterschiedlichen Stellen Pa, Pb, Pc in Strömungsrichtung und in Tiefenrichtung in den Grundmassestrom 5 injiziert werden. Es liegen also mehrere Einzelstränge der Zusatzmasse im Grundmassestrom 5 gekapselt vor. Die injizierte Zusatzmasse bewegt sich dann zusammen mit dem Grundmassestrom 5 in Richtung Auslass 8.

Wie auch in Figur 2 angedeutet ist, bewegen sich die Zusatzmasseströme nicht exakt geradlinig, sondern werden durch Strömungswiderstände sowie durch das Verhältnis des Volumenstroms des jeweiligen Zusatzmassestroms zu dem Volumenstrom des Grundmassestroms 5 von der Hauptströmungsrichtung abgelenkt, so dass sich eine lebendige Struktur ergibt. Entsprechendes kann bereits ausreichend sein, um eine marmorierte Struktur für z. B. ein Fleischersatzprodukt zu erzeugen. Möchte man eine noch größere Strukturierung erzielen, so ist es möglich, einen statischen und /oder dynamischen Mischer 11 im Grundmassestrom 5 vorzusehen.

Figur 2 zeigt beispielsweise einen dynamischen Mischer 11 mit einer Mischerwelle 22, an deren Vorderseite eine Mischeinrichtung, z.B. Arme angeordnet ist. Dazu kann das Gehäuse eine Wellendurchführung aufweisen. Die Mischerwelle 22 kann z. B. über einen Füllmaschinenantrieb 21 (siehe Figur 2) angetrieben werden. Durch Drehen des Mischers kommt es zu einer gezielten Verwirbelung der Zusatzmasseströme 6a, 6b, 6c und es entsteht eine unregelmäßige feinteilige Struktur 24, welche einer Fettstruktur eines Fleisches ähnelt. Diese Struktur liegt durch die Verwirbelung im gesamten Produktquerschnitt vor. Die Drehzahl des Mischers 11 muss so niedrig gehalten werden, dass es nicht zu einer Emulgation der beiden Produktphasen kommt. So darf die Mischerdrehzahl eine massenspezifische Drehzahl nicht übersteigen. Alternativ oder zusätzlich zu dem dynamischen Mischer 11 kann auch ein statischer Mischer eingesetzt werden, wobei auch der dynamische Mischer als statischer Mischer fungieren kann, wenn er nicht angetrieben wird. Als statischer Mischer können entsprechende Strömungsbrecher im Gehäuse 3 vorgesehen werden oder das Gehäuse 3 wird beispielsweise als Drallrohr ausgebildet. Wenn ausschließlich statische Mischelemente verwendet werden, vereinfacht sich die Vorrichtung wesentlich.

Vorteilhafterweise sind in der Gehäusewandung, d. h. entweder in der Grundkörperwandung 9a oder hier beispielsweise in der Zulaufsleitungswandung 10a, Düsenaufnahmen 12a, 12b, 12c vorgesehen, in denen die Düsen 7 austauschbar angeordnet werden können, z. B. eingeschraubt werden können. Die Düsenaufnahmen können aber auch durch Stopfen verschlossen werden, wenn an dieser Stelle kein Zusatzmassestrom über eine entsprechende Düse injiziert werden soll. Das heißt, dass die Position und die Anzahl der verwendeten Düsen 7 eingestellt werden kann. Auch die Tiefenposition der Düsen, d. h. wie tief die jeweilige Düse in das Gehäuse hineinragt, ist einstellbar, beispielsweise durch Einschrauben der Düse. Wie insbesondere auch aus Figur 1 hervorgeht, ragen die Düsen 7a, 7b, 7c unterschiedlich tief und hier auch von unterschiedlichen Seiten in das Gehäuse, so dass voneinander beabstandete Zusatzmasseströme erzeugt werden. Über die Position der Einspritzdüsen und ihre Tiefenposition kann die Verteilung der Zusatzmasse über den Querschnitt des Produkts eingestellt werden. Entsprechendes ermöglicht eine große Prozessfreiheit. Der Kunde kann ohne Zusatzteile oder eine neue Vorrichtung zu kaufen, die Strukturierung nach Wunsch anpassen.

Der marmorierte Grundmassestrom 50 wird dann weiter, wie nachfolgend noch näher erläutert, in das zweite Gehäuse 30 geschoben.

Figur 3 zeigt eine weitere bevorzugte Ausführungsform gemäß der vorliegenden Erfindung, die im Wesentlichen der in Figur 1 gezeigten Ausführungsform entspricht, wobei hier eine Einrichtung 13 zum Zuführen der Zusatzmasseströme 6a, 6b, 6c dargestellt ist. Wie auch bereits zuvor erläutert, wird hier beispielsweise der Grundmassestrom 5 über die Füllmaschine 300 zum Einlass 4 des ersten Gehäuses der Vorrichtung 1 gefördert. Die Mischerwelle 22 wird z.B. ebenfalls über einen Antrieb 21 der Füllmaschine 300 angetrieben. Grundsätzlich wäre es aber auch möglich, dass der Antrieb über einen eigenen Antrieb, z. B. im Gehäuse 3, erfolgt. Da hier der Antrieb über den Füllmaschinenantrieb 21 erfolgt und die Welle 22 gerade vom Maschinengehäuse, z.B. in Richtung T erstreckt, verläuft die Zulaufleitung 10 des Gehäuses 3 unter einem Winkel α zur Richtung bzw. zur Längsachse des Gehäuses. Dies ist allerdings nur beispielhaft.

Figur 3 zeigt jetzt auch die Einrichtung 13, die hier ebenfalls eine zweite Füllmaschine 200 umfasst, die ebenfalls einen Trichter 25, ein Förderwerk 26 und einen entsprechenden Auslass 27 aufweist. Dies ist nur beispielhaft. Hier könnte auch eine andere Fördereinrichtung vorgesehen sein. Im Anschluss an den Auslass 27 ist ein Füllstromteiler 14 vorgesehen, der den Zusatzmassestrom aus der Füllmaschine 200 in mehrere Zusatzmasseströme 6a, 6b, 6c in entsprechende Teilleitungen 15a, 15n aufteilt. Entsprechende Füllstromteiler sind aus dem Stand der Technik bekannt und weisen jeweilige Dosierelemente 28a bis 28n auf, die einen vorbestimmten Volumenstrom erzeugen. Vorteilhafterweise erzeugen die Dosiereinrichtungen 28a bis 28n einen Volumenstrom, der in allen Teilleitungen 15a, 15n gleich ist. Die Zuleitungen 15a, 15n sind mit den entsprechenden Düsen 7a, 7n verbunden. Wie ebenfalls in Figur 3 gezeigt ist, ragen die Düsen unterschiedlich tief in das Gehäuse 3. Durch den Füllstromteiler 14 kann gewährleistet werden, dass der Volumenstrom in allen Düsen konstant ist, unabhängig von der Position der Düsen. Als Alternative zum Füllstromteiler 14 kann an den Zuläufen der Düsen 7 eine nicht dargestellte Drossel angeordnet sein, um den Volumenstrom einzustellen, insbesondere über alle Düsen konstant zu halten. Die Drosseln dienen zur Feinjustage der Strömungswiderständen und Geschwindigkeiten an den Zuläufen der Düsen.

Es ist auch möglich, dass die Vorrichtung mehrere Einrichtungen 13 zum Zuführen unterschiedlicher Zusatzmassen zu unterschiedlichen Düsen aufweist, wobei dann die unterschiedlichen Zusatzmassen beispielsweise unterschiedliche Farbe oder unterschiedliche Konsistenz aufweisen.

In diesem Ausführungsbeispiel befinden sich die Düsen 7 im Grundkörper 9 des Gehäuses 3. Dies ist nur beispielhaft.

Der Volumenstrom der Grundmasse 5 kann über das Förderwerk 18 der Füllmaschine 300 eingestellt werden. Der Volumenstrom der Zusatzmasseströme 6a bis 6n kann über die Zuführeinrichtung 13, insbesondere das Förderwerk 26 der Füllmaschine und den Füllstromteiler 14 eingestellt werden, so dass das Verhältnis des Grundmassestroms zu den jeweiligen Zusatzmasseströmen einstellbar ist. Das Verhältnis wirkt sich ebenfalls auf die Struktur aus.

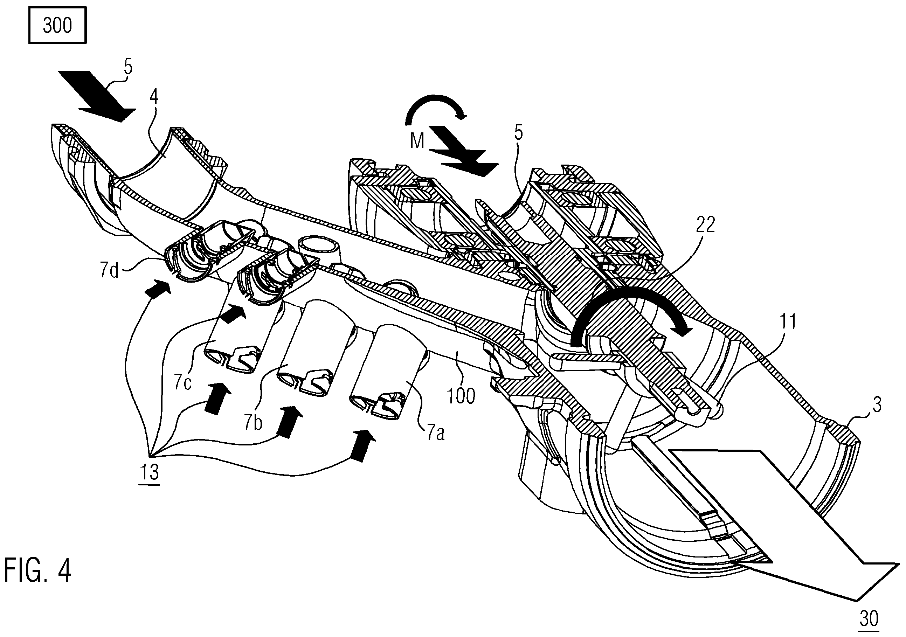

Figur 4 zeigt in perspektivischer Darstellung eine mögliche Ausführungsform mit mehreren Düsen 7 in der Zulaufsleitungswandung 10a sowie einer Mischerwelle 22, die über einen Motor M angetrieben wird. Es ist gut zu erkennen, dass die Düsen unterschiedlich weit in das Gehäuse 3 hineinragen. Der Grundmassestrom 5, in den mehrere Zusatzströme 6 injiziert wurden, strömt in diesem Ausführungsbeispiel von der Zulaufsleitung 10 in den Grundkörper 9 und wird dort über den dynamischen Mischer 11 verwirbelt.

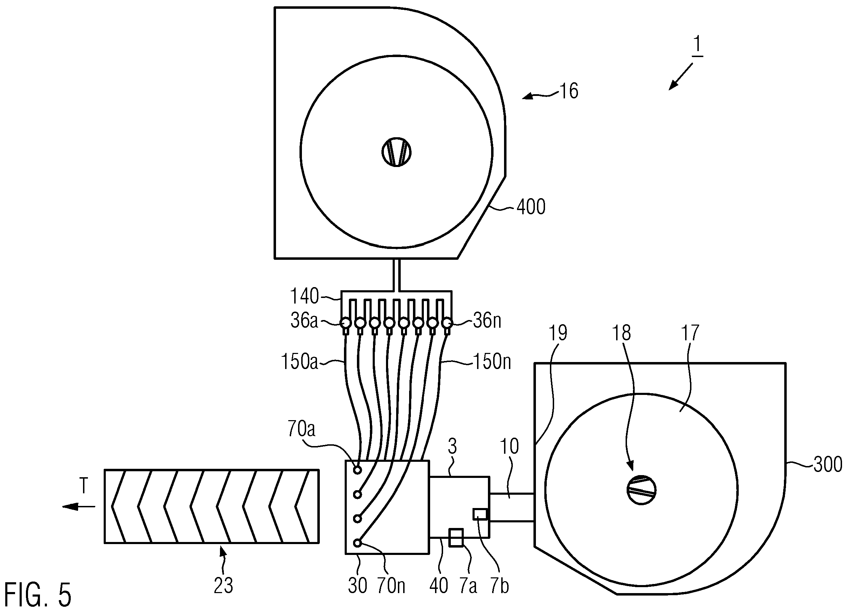

Figuren 5 bis Fig. 10 zeigen schematisch das Erzeugen einer gröberen Strukturierung mithilfe des zweiten Gehäuses 30.

Figur 5 zeigt eine Einrichtung 16 zum Zuführen von einer Zusatzmasse, die eine Füllmaschine 400 umfasst. Es gibt also zwei Füllmaschinen 300, 400 mit einer Vorrichtung zum Herstellen von marmorierten und strukturierten Lebensmitteln, insbesondere Fleischersatzprodukten. In Figur 5 ist das zuvor beschriebene erste Gehäuse 3 nur schematisch gezeigt. Bei der Füllmaschine 400 kann es sich um eine Füllmaschine zusätzlich zu der Füllmaschine 200 handeln oder es ist nur eine Füllmaschine vorgesehen, die sowohl Zusatzmasse zum Gehäuse 3 als auch zum Gehäuse 30 leitet.

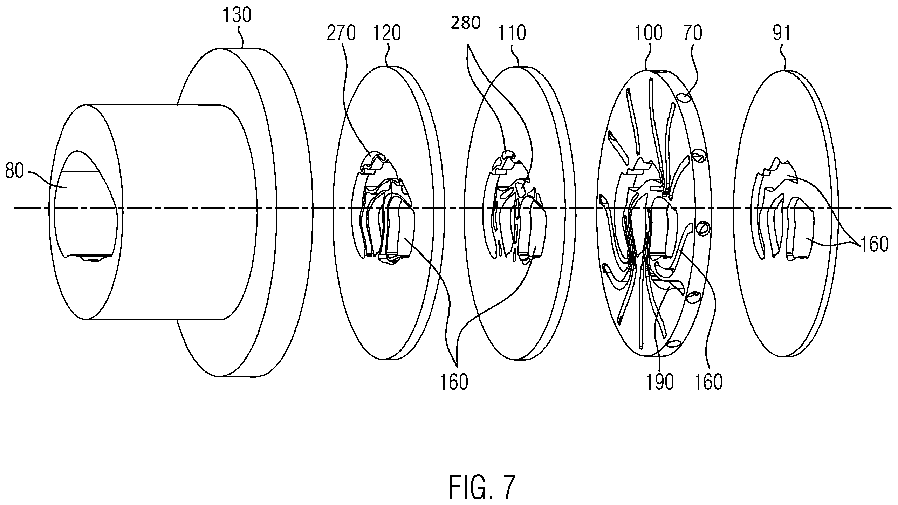

Das Gehäuse 30 schließt sich den Auslass 8 des 1. Gehäuses 3 mit dem Einlass 40 für den marmorierten Grundmassestrom 50 an. Ferner weist das Gehäuse einen Auslass 80 auf für das strukturierte Lebensmittel 2, d.h., die marmorierte Grundmasse 5, in die eine Zusatzmasse 6 eingebracht wurde. Im Gehäuse 30 befindet sich eine Strukturiereinrichtung 180 zum Erzeugen der definierten Struktur der Zusatzmasse 6 in der Grundmasse 5. Dazu weist die Struktureinrichtung 180 einen ersten Abschnitt 9 auf mit mindestens einer Öffnung 160 für den Grundmassestrom 50, der in Fig. 2 schraffiert dargestellt ist. Der erste Abschnitt 91 ist in diesem Ausführungsbeispiel als Platte, insbesondere als Matrizenplatte 91, ausgebildet, wie auch aus den Fig. 7, 8 und 9 hervorgeht. Die Matrizenplatte 91 weist die mindestens eine Öffnung, hier mehrere, insbesondere hier drei Öffnungen 160, auf, durch die der marmorierte Grundmassestrom 50 aus dem ersten Gehäuse 3 gedrückt wird, um mindestens einen marmorierten Grundmassestrang 500, bei diesem Ausführungsbeispiel z.B. drei Grundmassestränge 500 zu erzeugen. In Fig. 11 erkennt man die drei nebeneinander angeordneten Grundmasseströme 500 nach Passieren der Strukturiereinrichtung 180. Die Querschnittsfläche einer Öffnung für den Grundmassestrom liegt z.B. in einem Bereich von 3 - 400 cm².

Ferner weist die Vorrichtung einen zweiten Abschnitt 100 auf, hier z.B. in Form einer Platte, insbesondere der Leiterplatte 100, die an der Matrizenplatte 91 dicht anliegt. Der zweite Abschnitt weist mehrere Kanäle 190 auf, die mit Zuläufen 70 für jeweilige weitere Zusatzmassestränge 90 verbunden sind. Die Zuläufe 70 sind insbesondere um den Umfang der Leiterplatte 100 und um den Umfang des Gehäuses 30 verteilt angeordnet, wie insbesondere aus Fig. 10 und Fig. 7 hervorgeht. Der Zusatzmassestrom 9 kann beispielsweise, wie nachfolgend noch erläutert wird, von einer Zuführvorrichtung 16, insbesondere der Füllmaschine 400 zugeführt werden. Das kann gemäß einem bevorzugtem Ausführungsbeispiel auch vorteilhafter Weise die in der Figur 3 in Zusammenhang mit dem ersten Gehäuse beschriebene Füllmaschine 200 ( statt einer zusätzlichen Füllmaschine 400) sein, die sowohl Zusatzmasse zu den Düsen 7 als auch zu Zuläufen 70 fördert (die Verbindung zu den Zuläufen ist in der Figur 5 einfachheitshalber nicht dargestellt), was die Vorrichtung insgesamt vereinfacht, da nur 2 Füllmaschinen notwendig sind, eine für die Grundmasse und die andere für die Zusatzmasse 6 und die Zusatzmasse 9, wobei die Zusatzmasse 6 und die Zusatzmasse 9 aus dem gleichen Material sein können.

Die Kanäle 190 können den jeweiligen Zusatzmassestrom 9 nach innen an eine jeweilige vorbestimmte Stelle des Gehäusequerschnitts leiten, wie insbesondere aus Fig. 6 hervorgeht, aber auch aus den Fig. 7, 8 und 10.

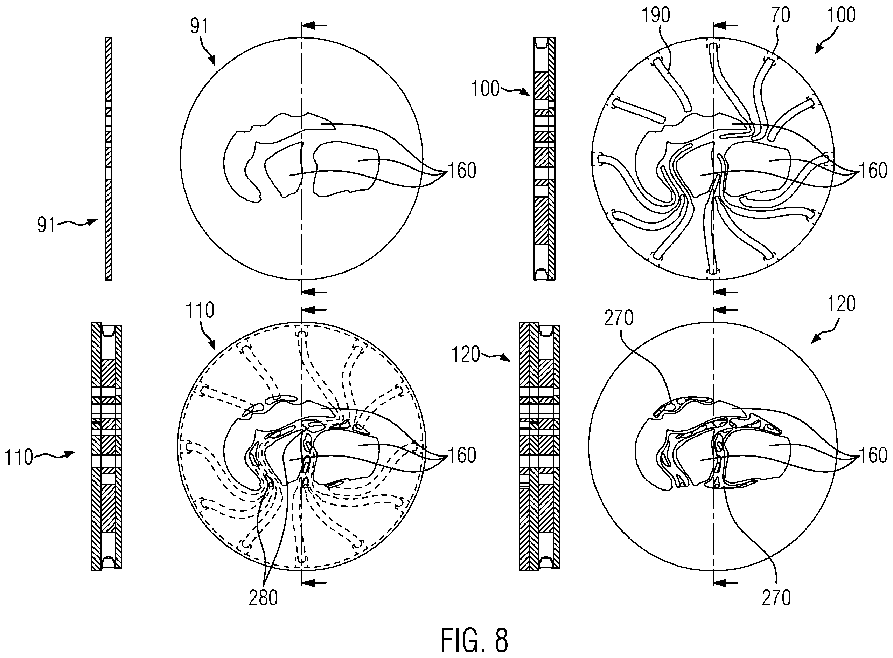

Die Kanäle 190 sind als Durchbrüche bzw. Schlitze in der Leiterplatte 100 ausgebildet und können einen sich erweiternden Abschnitt am äußeren Ende für einen Zulaufanschluss aufweisen. Die Querschnittsfläche eines Kanals 190 liegt beispielsweise in einem Bereich von 0,5 bis 150 mm². Zwischen den Öffnungen 160 sind Stege ausgebildet, wobei sich die Kanäle 190 bis in die Stege hinein erstrecken, wie insbesondere aus den Fig. 7 und 8 hervorgeht. Weiter weist die Leiterplatte 10 ebenfalls die Öffnung(en) 160 auf, die vorzugsweise deckungsgleich zu den Öffnungen (en) 160 in der Matrizenplatte 91 sind. Die Position, an der die Zusatzmasse zugeführt wird, kann zwischen den einzelnen Grundmassesträngen 500 liegen, aber auch in der äußeren Randregion in Bezug auf das Lebensmittel 2.

Weiter umfasst die Strukturiereinrichtung 180 einen dritten Abschnitt 110, insbesondere in Form einer Auslassplatte 110 mit mehreren Auslassöffnungen 28, wie insbesondere beispielsweise in den Fig. 7 und 8 erkannt werden kann. Diese Auslassöffnungen 280 stehen in Verbindung mit den jeweiligen Kanälen 190 an den vorbestimmten Positionen. So können Zusatzmassestränge 90 erzeugt werden, die sich ebenfalls in Strömungsrichtung bewegen. Weiter weist der dritte Abschnitt bzw. die Auslassplatte 110 auch die mindestens eine Öffnung 160 für den wenigstens einen in den vorherigen Platten erzeugten Grundmassestrang 500 auf.

Durch die Auslassöffnungen der Auslassplatte 110 kann die längliche Erstreckung der Zusatzmasse im Querschnitt des Lebensmittels definiert erzeugt werden.

Die Auslassplatte 110 und die Matrizenplatte 91 liegen jeweils dicht an der Leiterplatte 100 an, derart, dass die Kanäle 190 abgedichtet werden, wie insbesondere auch in der Fig. 10 erkannt werden kann.

Optional ist ein vierter Abschnitt 120, insbesondere eine Formplatte 120, vorgesehen, die ebenfalls mindestens eine Öffnung 160 für den in den vorherigen Platten erzeugten mindestens einen marmorierten Grundmassestrang 500 aufweist, sowie mehrere Öffnungen 270, über die die Zusatzmassestränge 90 rekombiniert werden können, um somit größere zusammenhängende Bereiche zu erzeugen.

Alternativ zum vierten Abschnitt 120 kann eine nicht gezeigte Trenneinheit vorgesehen sein, die die austretenden Stränge abschneidet und so beispielsweise Speckwürfel-ähnliche Produkte erzeugt werden können.

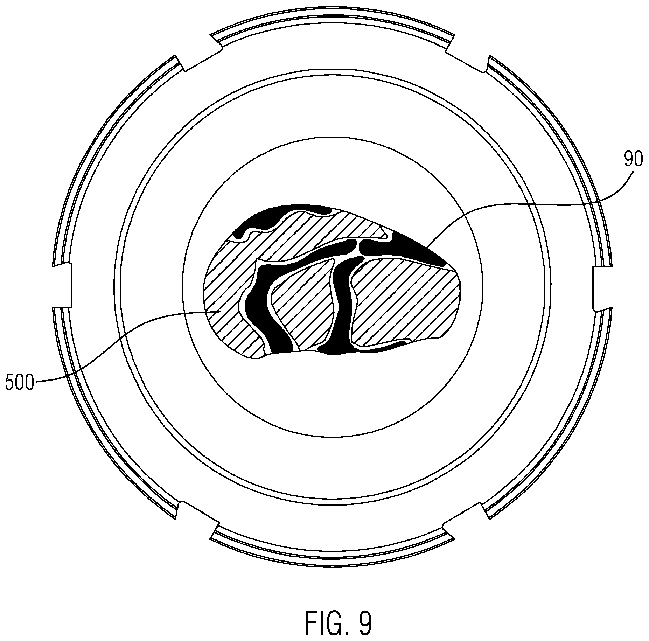

Fig. 9 zeigt die Draufsicht auf die extrudierten marmorierten Grundmassestränge 500 und Zusatzmassestränge 90 nach Verlassen der Strukturiereinrichtung 180, d.h. hier z.B. eines dritten oder vierten Abschnitts bzw. nach Verlassen der Auslassplatte 110 oder der Formplatte 120. Wie z.B. bei diesem Ausführungsbeispiel erkannt werden kann, gibt es noch Hohlräume zwischen den Grundmassesträngen 500 und den Zusatzmassesträngen 90. In Abhängigkeit der Weiterverarbeitung des extrudierten Lebensmittels 2 kann dann gemäß einer bevorzugten Ausführungsform in Strömungsrichtung betrachtet das Gehäuse 30 nach der Strukturiereinrichtung, insbesondere nach dem dritten oder vierten Abschnitt eine Extrusionsführung 130 aufweisen, in der sich die Grund- und Zusatzmassestränge ohne Lufteinschlüsse aneinanderlegen können, wie in den Figuren 6,7 und 10 gezeigt ist. Die Innenkontur der Extrusionsführung 130 entspricht im Wesentlichen der Außenkontur des Lebensmittels 2. Die Extrusionsführung 130 ist entweder als gerade Formstrecke mit im Wesentlichen konstanter Querschnittsfläche ausgebildet oder als komprimierende Formstrecke, derart, dass das Lebensmittel vom Austritt aus der Strukturiereinrichtung, d.h. hier z.B. dem dritten oder vierten Abschnitt komprimiert und somit verfestigt wird.

Die Extrusionsführung 130 kann auch divergierend gestaltet sein.

Fig. 10 zeigt die die Strukturiereinrichtung 180 im Gehäuse 30 in zusammengebautem Zustand, wobei hier deutlich erkannt werden kann, dass die einzelnen Platten 91, 100, 110, 120 flach aufeinandergelegt sind und mit einem Spannelement 20 im Gehäuse 30 fixiert werden. Die Vorspannung des Spannelements 20 sorgt für eine Abdichtung der Platten untereinander und nach außen. Hier ist die Extrusionsführung 130 Teil des Gehäuses 30. Das Gehäuse 30 kann dabei beispielsweise einen ersten Gehäuseabschnitt 30a aufweisen, in dem die Platten 91, 100, 110, 120 angeordnet sind, wobei die Platten und die Extrusionsführung 130 über das Spannelement 20 im ersten Gehäuseabschnitt 30a fixiert sind. Über das Spannelement 20 können die Gehäuseteile, also hier der Gehäuseabschnitt 30a und die Extrusionsführung 130 ebenfalls derart aneinandergepresst werden, dass das Gehäuse nach außen abgedichtet wird.

Die Platten 91, 100, 110, 120 sind austauschbar im Gehäuse 30 angeordnet. Bei diesem konkreten Ausführungsbeispiel kann durch Lösen des Spannelements 20 die Extrusionsführung 130 vom Gehäuseabschnitt 30a abgenommen werden und mindestens eine Platte des Plattensatzes ausgetauscht werden. Somit können auf einfache Art und Weise die Strukturen im Lebensmittel 2 variiert werden. Siehe hierzu auch Fig. 6.

Wie insbesondere aus der Fig. 5 hervorgeht, kann die Vorrichtung mindestens eine Einrichtung 16 zum Zuführen des Zusatzmassestroms Z umfassen, z.B. eine Füllmaschine 400 mit einem Trichter und einem Förderwerk, die vorzugsweise mindestens einen Füllstromteiler 140 aufweist, der einen Zusatzmassestrom in mehrere Zusatzmasseströme 9 in entsprechenden Teilleitungen 150a bis 150n aufteilt, wobei die Teilleitungen, z.B. in Form von Schläuchen, mit den Zuläufen 70 verbunden sind. Entsprechende Füllstromteiler sind aus dem Stand der Technik bekannt und weisen jeweilige Dosierelemente 36 a bis 36 n auf, die einen vorbestimmten Volumenstrom erzeugen. Vorteilhafterweise erzeugen die Dosiereinrichtungen einen Volumenstrom, der in allen Teilleitungen 150a bis 150n gleich ist. Durch die Verwendung des Füllstromteilers 140 ist die Zusatzmasse in den Kanälen 190 mit unterschiedlichen Strömungswiderständen zwangsgeführt und weist je Kanal 190 einen definierten über alle Kanäle 190 hinweg gleichbleibenden Volumenstrom auf. Dadurch ist das System masseunabhängig. Dies ermöglicht auch, dass unterschiedliche Platten verwendet werden können, ohne dass der Volumenstrom im Hinblick auf unterschiedliche Strömungswiderstände in den Kanälen angepasst werden muss. Das heißt auch, dass es beim Wechseln der Massen und/oder Platten keinerlei Anpassung des Systems durch den Bediener erfordert. Auf die Verwendung eines Füllstromteilers 140 kann dann verzichtet werden, wenn die Geometrie der einzelnen Kanäle 190 so definiert ist, dass die Strömungswiderstände über alle Kanäle hinweg nahezu identisch sind. Dies kann z.B. über eine simulative Untersuchung erreicht werden. Alternativ können auch Drosselventile für die jeweiligen Zuläufe vorgesehen werden, die den Volumenstrom einstellen. Andernfalls würde die Zusatzmasse 9 vorwiegend an den Stellen ausgestoßen werden, an denen der Strömungswiderstand gering ist.

Wie bereits erwähnt, kann eine Füllmaschine sowohl für den Zusatzmassestrom 5, der den Düsen 7 zugeführt wird als auch für den Zusatzmassestrom 9, der die Zuläufen 70 zugeführt wird vorgesehen sein. Dazu kann es einen oder mehrere Füllstromteiler geben.

Es ist auch möglich, dass die erfindungsgemäße Vorrichtung 1, wie sie beispielsweise in Fig. 1 gezeigt ist, mehrere Einrichtungen 13,16 zum Zuführen unterschiedlicher Zusatzmassen zu unterschiedlichen Zuläufen 70 und/ oder Düsen 7 aufweist. Somit können auch unterschiedliche Farben und weitere Strukturen durch unterschiedliche Zusatzmassen 6,9 erzeugt werden.

Vorteilhafterweise ist das Verhältnis des Grundmassestroms 5 zu den jeweiligen Zusatzmasseströmen 9 einstellbar, z.B. über den an der Füllmaschine 300 eingestellten Volumenstrom oder aber über den an der Füllmaschine 200 oder 400 und am Füllstromteiler 14, 140 eingestellten Volumenstrom. Die Volumenströme des marmorierten Grundmassestroms 50 und der einzelnen Zusatzmasseströme 9 können vorzugsweise derart eingestellt werden, dass die Strömungsgeschwindigkeiten des erzeugten Grundmassestrangs 500 und der Zusatzmassestränge 90 im Gehäuse im Wesentlichen gleich sind.

Nachfolgend wird ein Ausführungsbeispiel eines erfindungsgemäßen Verfahrens näher erläutert.

Zunächst wird in Abhängigkeit der gewünschten marmorierten Struktur und in Abhängigkeit der verwendeten Grundmasse 5 und Zusatzmasse 6 eine bestimmte Anzahl und Position der Düsen 7 gewählt. Auch wird eine bestimmte Tiefenposition P, d. h. die Stelle, an der der Zusatzmassenstrom injiziert wird, festgelegt bzw. optional verändert. Es wird weiter ein gewünschter Volumenstrom der Grundmasse 5, beispielsweise in der Füllmaschine 300 und ein Volumenstrom der jeweiligen Zusatzmassenströme 6, zum Beispiel in der Füllmaschine 200 und dem Füllstromteiler 14 festgelegt. Alternativ können die entsprechenden zuvor genannten Parameter bereits vorab festgelegt sein und die Parameter in einer Steuerung, beispielsweise der Maschinensteuerung der Füllmaschine gespeichert sein.

Zur Herstellung des Lebensmittels 2 wird ein Grundmassestrom 5 erzeugt, der zum Beispiel von einer Füllmaschine 300 in den Einlass 4 des Gehäuses 3 der erfindungsgemäßen Vorrichtung 1 gefördert wird. In den Grundmassestrom 6 wird dann, wie zuvor beschrieben, über die ausgewählten Düsen 7 der Zusatzmassestrom 6 injiziert. Optional wird der Grundmassestrom mit den Zusatzmasseströmen im Gehäuse 3 über einen dynamischen Mischer und/oder einen statischen Mischer 11 verwirbelt. Dabei wird die Mischerdrehzahl insbesondere stufenlos, eingestellt, derart, dass sich eine gewünschte Struktur ergibt.

Der marmorierte Grundmassestroms 50 wird dann optional am Auslass 8 des Gehäuses 3 in das Gehäuse 30 geleitet. In einem ersten Abschnitt 91 einer Strukturiereinrichtung 180 wird der mindestens eine Grundmassestrang 500 erzeugt in dem der Grundmassestrom durch die Öffnung(en) 160 gedrückt wird. Über mehrere Zuläufe 70, die insbesondere ringförmig um den Umfang des Gehäuses 3 verteilt sind, werden mehrere Zusatzmasseströme mehreren Kanälen 190, die in einem zweiten Abschnitt 100 ausgebildet sind, zugeleitet. In einem dritten Abschnitt 110 können die Zusatzmasseströme 9 aus den Kanälen 190 über entsprechende Auslassöffnungen 280 austreten, wodurch mehrere Zusatzmassestränge erzeugt werden. Die Auslassöffnungen liegen vorzugsweise in einer Ebene, die sich senkrecht zur Strömungsrichtung in der Strukturiereinrichtung 180 erstreckt. Vorzugsweise werden in einem vierten Abschnitt 120 die Massestränge 90 rekombiniert. Die erzeugten Grundmassestränge und Zusatzmassenstränge können nachfolgend in einer Extrusionsführung 130 zusammengefügt werden, ohne dass es Lufteinschlüsse gibt. Wie zuvor beschrieben, sind die Abschnitte 91, 100, 110, 120 von mehreren aneinander liegenden in Strömungsrichtung hintereinander angeordneten Platten ausgebildet.

Zum Erzeugen einer neuen Struktur werden diese Platten, zumindest jedoch eine der Platten, ausgetauscht.

Im Anschluss an die Vorrichtung 1 kann das Lebensmittel 2 z.B., wie in Fig. 5 dargestellt ist, über ein Förderband 23 abtransportiert werden und gegebenenfalls noch in Einzelabschnitte geschnitten werden. Es ist aber auch möglich, dass das Lebensmittel 2 in eine Wursthülle bzw. in einen Darm ausgestoßen wird. Hierzu kann in Strömungsrichtung nach der Vorrichtung 1 ein Füllrohr angeordnet sein, auf dem z.B. eine Wursthülle gerafft ist und in bekannter Weise das Lebensmittel 2 in den Darm ausgestoßen wird. Bei diesem Ausführungsbeispiel kann dann auf eine komprimierende Extrusionsführung 130 verzichtet werden.

Die vorliegende Erfindung wurde im Detail mit den entsprechenden Platten 91, 100, 110, 120 beschrieben. Alternativ kann statt der einzelnen Platten ein 3D-gedrucktes Bauteil mit den entsprechenden ersten, zweiten und dritten (optional vierten) Abschnitten verwendet werden. Auch ist es möglich, dass die Platten zum Teil zusammengefasst sind, d.h. dass eine Platte mehrere Abschnitte aufweist.

Auch eine Erweiterung der Plattenanordnung (bspw. durch eine zweite Leiterplatte) ist möglich, sodass 2 - n Zusatzmassen dem Prozess zugeführt werden können. Es können auch unterschiedliche Zusatzmassen durch eine Erweiterung des Plattenstapels injiziert werden.

Die Geometrie der Platten mit den entsprechenden Öffnungen ist kundenabhängig und kann sowohl für die Strukturierung von veganen Fleischalternativen als auch zur Formgebung von beispielsweise Bärchen-Wurst etc. verwendet werden. Als Grundmasse kann beispielsweise Kartoffelstampf, Joghurt, Käse etc. verwendet werden. Als Zusatzmasse kann beispielsweise Marinade, eingefärbte Massen oder Fettersatzmasse verwendet werden, aber auch die Verwendung von weiteren pastösen Massen zur Herstellung definierter Muster oder Formen, wie Eisprodukte, Teigprodukte oder Produkte der Molkereiindustrie, ist möglich.

Fig. 11 zeigt grob schematisch einen Querschnitt durch das mit den oben beschriebenen Ausführungsbeispielen erzeugten Lebensmittel 2. Deutlich kann die Grundmasse 5 und die Zusatzmasse 6 und 9 erkannt werden, die einer realitätsgetreuen Nachbildung eines Steaks entsprechen.

Gemäß einer weiteren bevorzugten Ausführungsform erfolgt eine automatische Positionsanpassung der Düsen, beispielsweise durch ansteuerbare Ventile. Auch die Tiefenposition der Düsen kann gemäß einer bevorzugten Ausführungsform automatisch eingestellt werden, beispielsweise über einen ansteuerbaren Verstellmechanismus.

Auch die Mischerdrehzahl kann in Abhängigkeit des Volumenstroms und/oder des resultierenden Produktbildes automatisch angepasst werden. Dazu kann eine Bilderkennungseinrichtung vorgesehen sein, die die marmorierte Struktur eines Querschnitts des Lebensmittels 2 oder des marmorierten Grundmassestroms erfasst. Die Drehzahl des dynamischen Mischers 11 kann dann derart verändert werden, bis sich eine gewünschte Struktur ergibt. Dazu kann beispielsweise auch das erfasste Bild mit einem solchen Bild verglichen werden und/oder die Einstellung der Drehzahl erfolgt mittels Kl.

Das zuvor beschriebene werkzeuglose Einsetzen der Düsen 7 in entsprechende Düsenaufnahmen 12 kann beispielsweise über folgende Mechanismen erfolgen: Bajonett-Verschluss, Klemmverbindung, Rastbolzen, Klemmhebel etc.

Zusammengefasst ermöglichen die zuvor beschriebenen Ausführungsbeispiele der Erfindung folgende Vorteile:
- Einen automatisierten kontinuierlichen Extrusionsprozess zum Herstellen des marmorierte und strukturierten Lebensmittels 2.
- Über die Düsenposition, -anzahl, -tiefenposition und -geometrie können kundenspezifische Marmorierungsstrukturen eingebracht werden und über die Auswahl einer bestimmter Strukturiereinrichtung, insbesondere bestimmter Platten kann eine gewünschte gröbere Struktur in die marmorierte Grundmasse eingebracht werden.
- Die Zwangsführung der Zusatzmasse (mit Füllstromteiler) oder das Angleichen der Strömungswiderstände (ohne Füllstromteiler) z.B. über entsprechende Drosseln, führt zu einem gleichmäßigen Austreten der Zusatzmasse 6,9 aus den einzelnen Düsen 7 bzw. Zuläufen 70 und damit zu gleichmäßigen Einzelsträngen.
- Initiale, Feineinspritzung der Zusatzmasse 6 - dadurch nur geringe mechanische Belastung der Produkte zur Herstellung der Marmorierungsstruktur nötig.
- Einfaches Anbringen der Düsen 7 an am Umfang des Gehäuses 3 angebrachten Düsenaufnahmen.
- Flexibles System und damit verbundene große Prozessfreiheit.
- Verwendung von pastösen, fließfähigen, aber auch zähen, pumpfähigen Massen möglich.
- Durch die Drehzahl des dynamischen Mischers 11 kann die Feinheit der Marmorierung angepasst werden. Alternativ können zusätzliche oder alleinige statische Mischer 3 ins Gehäuse eingebracht werden.
- Hygienische Bauteile die eine einfache Reinigung ermöglichen.
- Robustheit der Einzelteile
- realitätsgetreu Nachbildung von Fleischersatzprodukten.

## Patentansprüche

1. Vorrichtung (1) zum Herstellen von marmorierten und strukturierten Lebensmitteln (2), insbesondere Fleischersatzprodukten, umfassend:
ein erstes Gehäuse (3) mit
einem Einlass (4) für einen Grundmassestrom (5),
mindestens eine, insbesondere mehrere Düsen (7a, 7b, 7c) zum Einspritzen eines oder mehrerer Zusatzmasseströme (6) in den Grundmassestrom (5) sowie
einem Auslass (8) für den marmorierten Grundmassestrom (5), der eine marmorierte Struktur der Zusatzmasse in der Grundmasse aufweist sowie
ein zweites Gehäuse (30), mit einem Einlass (40) für den marmorierten Grundmassestrom (50) und einem Auslass für das strukturierte Lebensmittel (2) und mit
einer Strukturiereinrichtung (180) zum Erzeugen einer definierten Struktur einer weiteren Zusatzmasse in dem marmorierten Grundmassestrom, wobei die Strukturiereinrichtung (180) umfasst:
mindestens eine Öffnung (160) für den marmorierten Grundmassestrom (50) zur Erzeugung mindestens eines Grundmassestrangs (500) und
mehrere Zuläufe (70a, 70b, 70c) für weitere Zusatzmasseströme (9) zum Erzeugen mehrerer Zusatzmassestränge (90) wobei
die Strukturiereinrichtung (180) einen
ersten Abschnitt (91) aufweist, in dem die mindestens eine Öffnung (160) angeordnet ist und
einen zweiten Abschnitt (100) mit mehreren Kanälen (190), die mit Zuläufen (70) für die jeweiligen Zusatzmasseströme (9) verbunden sind und den Zusatzmassestrom (9) an eine jeweilige vorbestimmte Position des Gehäusequerschnitts leiten und
einem dritten Abschnitt (110) mit mehreren Auslassöffnungen (280), die in Verbindung mit den jeweiligen Kanälen (190) stehen um die mehrere Zusatzmassestränge (90) zu erzeugen.

2. Vorrichtung (1) nach Anspruch 1, **dadurch gekennzeichnet, dass** die Vorrichtung noch einen vierten Abschnitt (120) aufweist, mit mehreren Öffnungen (270) über die die Zusatzmassestränge (90) rekombiniert werden können.

3. Vorrichtung (1) nach mindestens einem der Ansprüche 1-2, **dadurch gekennzeichnet, dass** in Strömungsrichtung betrachtet, das zweite Gehäuse (3) nach der Strukturiereinrichtung (18) eine Extrusionsführung (130) aufweist, in der sich die marmorierten Grund-und Zusatzmassestränge aneinander legen, wobei vorzugsweise die Innenkontur der Extrusionsführung (130) im Wesentlichen der Außenkontur des Lebensmittels (2) entspricht und die entweder als gerade Formstrecke mit im wesentlichen konstanter Querschnittsfläche ausgebildet ist oder als komprimierende Formstrecke, derart dass das Lebensmittel (2) nach Austritt aus der Strukturiereinrichtung (180) komprimiert wird.

4. Vorrichtung (1) nach mindestens einem der Ansprüche 2 bis 3, **dadurch gekennzeichnet, dass** die Abschnitte (91, 100, 110, 120) in Form von mehreren aneinanderliegenden in Strömungsrichtung hintereinander angeordneten Platten ausgebildet sind, die vorzugsweise austauschbar im zweiten Gehäuse (30) angeordnet sind.

5. Vorrichtung (1) nach mindestens einem der Ansprüche 1-4, **dadurch gekennzeichnet, dass** die Düsen (7a, 7b, 7c) derart in das erste Gehäuse (3) hineinragen, dass die Zusatzmasseströme (6) in den Grundmassestrom an unterschiedlichen Stellen einbringbar sind, wobei die Düsen (7a, 7b, 7c) insbesondere unterschiedlich tief und/oder von unterschiedlichen Seiten des Gehäuses in das Gehäuse (3) hineinragen und insbesondere vom Grundmassestrom umströmt werden.

6. Vorrichtung (1) nach mindestens einem der Ansprüche 1-5, **dadurch gekennzeichnet, dass** die Vorrichtung einen statischen und/oder einen dynamischen Mischer (11) aufweist, der vorzugsweise stromabwärts von den Düsen (7a, 7b, 7c) und vor dem zweiten Gehäuse (30) angeordnet ist um die Zusatzmasseströme (6) zu verwirbeln.

7. Vorrichtung nach mindestens einem der vorhergehenden Ansprüche, **dadurch gekennzeichnet, dass** es 2 - 24 Düsen gibt und insbesondere 2-24 Düsenaufnahmen und/ oder die Auslassfläche der einzelnen Düsen in einem Bereich von 0,2-25mm² liegt.

8. Vorrichtung (1) nach mindestens einem der Ansprüche 1-7, **dadurch gekennzeichnet, dass** in der Strukturiereinrichtung (180) im zweiten Gehäuse (30) die mindestens eine Öffnung (160) zur Erzeugung des mindestens einen Grundmassestrangs (500) jeweils eine Querschnittsfläche aufweist, die größer ist als die Querschnittsfläche der jeweiligen Auslassöffnungen (280) zur Erzeugung eines Zusatzmassestrangs (90) und insbesondere die Querschnittsfläche der jeweiligen Auslassöffnungen (280) zur Erzeugung eines Zusatzmassestrangs (90) größer ist als die Auslassfläche der jeweiligen Düsen (7a, 7b, 7c) im ersten Gehäuse.

9. Vorrichtung (1) nach mindestens einem der Ansprüche 1-8, **dadurch gekennzeichnet, dass** die mindestens eine Öffnung (160) zur Erzeugung des mindestens eines Grundmassestrangs (500) jeweils eine Querschnittsfläche in einem Bereich von 3 - 400 cm² aufweist und die Kanäle (190) vorzugsweise eine Querschnittsfläche in einem Bereich von 0,5 bis 150 mm² aufweisen.

10. Vorrichtung (1) nach mindestens einem der Ansprüche 1-9, **dadurch gekennzeichnet, dass** die Vorrichtung (1) mindestens eine Einrichtung (13) zum Zuführen der Zusatzmasseströme (6,9) für das erste und/oder zweite Gehäuse umfasst, die vorzugsweise mindestens einen Füllstromteiler (14) aufweist, der einen Zusatzmassestrom in mehreren Zusatzmasseströme (6) in entsprechenden Teilleitungen (15a, 15b, 15n, 150a, 150b, 150c) aufteilt, wobei die Teilleitungen (15a, 15b, 15n) 150a, 150b, 150c) mit den Düsen (7a, 7b, 7c) und/oder den Zuläufen (70a, 70b, 70c) verbunden sind.

11. Füllmaschine (300) mit einer Vorrichtung (1) zum Herstellen von marmorierten und strukturierten Lebensmitteln (2) nach mindestens einem der Ansprüche 1-10, wobei die Füllmaschine einen Trichter (17), ein Fördererwerk (18) und einen Auslass (19), der mit dem Einlass (4) des ersten Gehäuses (3) verbunden ist, aufweist.

12. Füllmaschine nach Anspruch 11, **dadurch gekennzeichnet, dass** das Verhältnis des Grundmassestroms (5) , der dem ersten Gehäuse (3) zugeführt wird zu den jeweiligen Zusatzmasseströmen (6) , die den Düsen (7a, 7b, 7c) im ersten Gehäuse (3 ) zugeführt werden einstellbar ist und insbesondere das Verhältnis des Grundmassestroms (5), der dem ersten Gehäuse (3) zugeführt wird zu den jeweiligen Zusatzmasseströmen (9), die den Zuführungen (70 a, 70 b, 70 c) im zweiten Gehäuse (30) zugeführt werden, einstellbar ist.

13. Verfahren zum Herstellen von marmorierten strukturierten Lebensmitteln (2), insbesondere mit einer Füllmaschine (100) nach Anspruch 11 oder 12, **dadurch gekennzeichnet, dass** ein Grundmassestrom (5) durch ein erstes Gehäuse (3) erzeugt wird und
in den Grundmassestrom (5) mehrere Zusatzmasseströme (6) über jeweilige Düsen (7a, 7b, 7c) eingespritzt werden und
der mit den Zusatzmasseströmen marmorierte Grundmassestrom (50) in ein zweites Gehäuse (30) geleitet wird in einer Strukturiereinrichtung (180)
durch mindestens eine Öffnung (160) geführt wodurch mindestens ein Grundmassestrang (500) erzeugt wird und weitere Zusatzmasseströme (9) mehreren Zuläufen (70a,70b,70c) im zweiten Gehäuse zugeführt werden, wodurch mehrere mehrerer Zusatzmassestränge (90) erzeugt werden, wobei
die Strukturiereinrichtung (180) einen
ersten Abschnitt (91) aufweist, in dem die mindestens eine Öffnung (160) angeordnet ist und
einen zweiten Abschnitt (100) mit mehreren Kanälen (190), die mit Zuläufen (70) für die jeweiligen Zusatzmasseströme (9) verbunden sind und den Zusatzmassestrom (9) an eine jeweilige vorbestimmte Position des Gehäusequerschnitts leiten und
einem dritten Abschnitt (110) mit mehreren Auslassöffnungen (280), die in Verbindung mit den jeweiligen Kanälen (190) stehen um die mehrere Zusatzmassestränge (90) zu erzeugen.

14. Verfahren nach Anspruch 13, **dadurch gekennzeichnet, dass** in Strömungsrichtung betrachtet nach der Strukturiereinrichtung (180), sich die Grund- und Zusatzmassestränge in einer Extrusionsführung (130) aneinanderlegen.

## Claims

1. An apparatus (1) for producing marbled and structured food products (2), in particular meat alternative products, comprising:
a first housing (3) with
an inlet (4) for a base mass flow (5),
at least one, in particular a plurality of nozzles (7a, 7b, 7c) for injecting one or more additional mass flows (6) into the base mass flow (5), and
an outlet (8) for the marbled base mass flow (5) having a marbled structure of the additional mass in the base mass, and
a second housing (30) with an inlet (40) for the marbled base mass flow (50) and an outlet for the structured food product (2) and including
a structuring device (180) for producing a defined structure of another additional mass within the marbled base mass flow, wherein the structuring device (180) comprises:
at least one opening (160) for the marbled base mass flow (50) for producing at least one base mass strand (500) and
a plurality of feeds (70a, 70b, 70c) for further additional mass flows (9) for producing a plurality of additional mass strands (90), wherein
the structuring device includes
a first section (91) having at least one opening (160) arranged therein, and
a second section (100) with a plurality of channels (190) connected to feeds (70) for the respective additional mass flows (9) and leading the additional mass flow (9) to a respective predetermined position of the housing cross-section, and
a third section (110) with a plurality of outlet openings (280) in communication with the respective channels (190) for producing the plurality of additional mass strands (90).

2. The apparatus (1) according to claim 1, **characterized in that** the apparatus moreover has a fourth section (120) with a plurality of openings (270) through which the additional mass strands (19) may be recombined.

3. The apparatus (1) according to at least anyone of claims 1 - 2, **characterized in that,** viewed in the flow direction, the second housing (3) has an extrusion head (130) downstream of the structuring device (18) in which the marbled bass and additional mass flows adjoin each other, wherein preferably the inner conture of the extrusion head (130) substantially matches the outer conture of the food product (2) and is either formed as a straight forming line with a substantially constant cross-section or as a compressing forming line so that the food product (2) is compressed after exiting the structuring device (180).

4. The apparatus (1) according to at least anyone of claims 2 to 3, **characterized in that** the sections (91, 100, 110, 120) are formed as a plurality of adjacent plates succeeding each other in the flow direction and preferably being exchangeably arranged in the second housing (30).

5. The apparatus (1) according to at least anyone of claims 1 - 4, **characterized in that** the nozzles (7a, 7b, 7c) project into the first housing (3) such that the additional mass flows (6) can be introduced into the base mass flow at various positions, wherein, in particular, the nozzles (7a, 7b, 7c) project into the housing (3) in various depths and/or from various sides of the housing and are in particular surrounded by the base mass flow.

6. The apparatus (1) according to at least anyone of claims 1 - 5, **characterized in that** the apparatus includes a static and/or a dynamic mixer (11), which is preferably arranged downstream of the nozzles (7a, 7b, 7c) and upstream of the second housing (30) for swirling the additional mass flows (6).

7. The apparatus according to at least anyone of the preceding claims, **characterized in that** 2 - 24 nozzles, and in particular 2 - 24, nozzle receptacles are provided and/or the outlet area of the individual nozzles is within a range of 0.2 - 25 mm².

8. The apparatus (1) according to at least anyone of claims 1 - 7, **characterized in that** within the structuring device (180) in the second housing (30) the at least one opening (160) has a cross-sectional area for producing the at least one base mass flow (500) that is larger than the cross-sectional area of the respective outlet openings (280) for producing an additional mass strand (90) and in particular the cross-sectional area of the respective outlet openings (280) for producing an additional mass strand (90) is larger than the outlet area of the respective nozzles (7a, 7b, 7c) in the first housing.

9. The apparatus (1) according to at least anyone of claims 1 - 8, **characterized in that** the at least one opening (160) for producing the at least one base mass flow (500) has at least a cross-sectional area in a range of 3 - 400 cm² and the channels (190) preferably have a cross-sectional area in a range from 0.5 to 150 mm².

10. The apparatus (1) according to at least anyone of claims 1 - 9, **characterized in that** the apparatus (1) comprises at least a device (13) for supplying the additional mass flows (6, 9) for the first and/or second housings that preferably includes at least one filling flow divider(14) dividing an additional mass flow into a plurality of additional mass flows (6) in respective branch lines (15a, 15b, 15n, 150a, 150b, 150c) wherein the branch lines (15a, 15b, 15n, 150a, 150b, 150c) are coupled to the nozzles (7a, 7b, 7c) and/or to the feeds (70a, 70b, 70c).

11. A filling machine (300) with an apparatus (1) for producing marbled and structured food products (2) according to at least anyone of claims 1 - 10, wherein the filling machine includes a hopper (17), a conveyor (18) and an outlet (19) connected to the inlet (4) of the first housing (3).

12. The filling machine according to claim 11, **characterized in that** the ratio of the base mass flow (5) supplied to the first housing (3) to the respective additional mass flows (6) supplied to the nozzles (7a, 7b, 7c) in the first housing (3) is adjustable and in particular the ratio of the base mass flow (5) supplied to the first housing (3) to the respective additional mass flows (9) supplied to the feeds (70 a, 70 b, 70 c) in the second housing (30) is adjustable.

13. A method for producing marbled and structured food products (2), in particular with a filling machine (100) according to claims 11 or 12, **characterized in that** a base mass flow (5) is produced by a first housing (3) and
a plurality of additional mass flows (6) is injected into the base mass flow (5) via respective nozzles (7a, 7b, 7c), and
the base mass flow (50) marbled with the additional mass flows is fed into a second housing (30) guided in a structuring device (180) through at least one opening (160) producing at least one base mass flow (500), and further additional mass flows (9) are supplied to a plurality of feeds (70a,70b,70c) in the second housing producing various of a plurality of additional mass flows (90), wherein
the structuring device includes
a first section (91) having at least one opening (160) arranged therein, and
a second section (100) with a plurality of channels (190) connected to feeds (70) for the respective additional mass flows (9) and leading the additional mass flow (9) to a respective predetermined position of the housing cross-section, and
a third section (110) with a plurality of outlet openings in communication with the respective channels (190) for producing the plurality of additional mass strands (90).

14. The method according to claim 13, **characterized in that,** seen in the flow direction, downstream of the structuring device (180) the bass and additional mass flow strands adjoin each other within an extrusion head (130).

## Revendications

1. Dispositif (1) pour la fabrication d'aliments marbrés et structurés (2), en particulier de substituts de viande, comprenant :
un premier boîtier (3) avec
une entrée (4) pour un flux de masse de base (5),
au moins une buse, et en particulier plusieurs buses (7a, 7b, 7c), pour injecter un ou plusieurs flux de masse additionnelle (6) dans le flux de masse de base (5), et
une sortie (8) pour le flux de masse de base marbré (5) qui présente une structure marbrée de la masse additionnelle dans la masse de base, et
un deuxième boîtier (30) comportant une entrée (40) pour le flux de masse de base marbré (50) et une sortie pour l'aliment structuré (2), et
un équipement de structuration (180) destiné à générer une structure définie d'une autre masse additionnelle dans le flux de masse de base marbré, dans lequel l'équipement de structuration (180) comprend :
au moins une ouverture (160) pour le flux de masse de base marbré (50) afin de générer au moins un brin de masse de base (500), et
plusieurs admissions (70a, 70b, 70c) pour d'autres flux de masse additionnelle (9) afin de générer plusieurs brins de masse additionnelle (90),
dans lequel l'équipement de structuration (180) comporte
une première section (91) dans laquelle est agencée au moins une ouverture (160), et
une deuxième section (100) avec plusieurs canaux (190) qui sont connectés à des admissions (70) pour les flux de masse additionnelle respectifs (9) et dirigent le flux de masse additionnelle (9) jusqu'à une position prédéterminée respective de la section transversale du boîtier, et
une troisième section (110) avec plusieurs ouvertures de sortie (280) qui sont connectées aux canaux respectifs (190) pour générer lesdits plusieurs brins de masse additionnelle (90).

2. Dispositif (1) selon la revendication 1, **caractérisé en ce que** le dispositif comporte aussi une quatrième section (120) avec plusieurs ouvertures (270) à travers lesquelles les brins de masse additionnelle (90) peuvent être recombinés.

3. Dispositif (1) selon au moins l'une des revendications 1 et 2, **caractérisé en ce que**, vu dans la direction d'écoulement, le deuxième boîtier (3) après l'équipement de structuration (18) comporte un guide d'extrusion (130) dans lequel les brins marbrés de masse de base et de masse additionnelle sont agencés côte à côte, dans lequel le contour interne du guide d'extrusion (130) correspond de préférence substantiellement au contour externe de l'aliment (2) et est conçu soit comme une section de formage droite avec une surface de section transversale substantiellement constante, soit comme une section de formage par compression, de sorte que l'aliment (2) soit comprimé après sa sortie de l'équipement de structuration (180).

4. Dispositif (1) selon au moins l'une des revendications 2 et 3, **caractérisé en ce que** les sections (91, 100, 110, 120) sont constituées sous la forme de plusieurs plaques adjacentes agencées l'une derrière l'autre dans la direction d'écoulement, qui sont de préférence agencées de manière interchangeable dans le deuxième boîtier (30).

5. Dispositif (1) selon au moins l'une des revendications 1 à 4, **caractérisé en ce que** les buses (7a, 7b, 7c) font saillie dans le premier boîtier (3) de manière à ce que les flux de masse additionnelle (6) puissent être introduits dans le flux de masse de base à différents endroits, dans lequel les buses (7a, 7b, 7c) font en particulier saillie dans le boîtier (3) à différentes profondeurs et/ou sur différents côtés du boîtier et sont en particulier entourées par le flux de masse de base.

6. Dispositif (1) selon au moins l'une des revendications 1 à 5, **caractérisé en ce que** le dispositif comporte un mélangeur statique et/ou dynamique (11) qui est de préférence agencé en aval des buses (7a, 7b, 7c) et devant le deuxième boîtier (30) pour faire tourbillonner les flux de masse additionnelle (6).

7. Dispositif selon au moins l'une des
revendications précédentes, **caractérisé en ce qu'**il comporte de 2 à 24 buses, et en particulier de 2 à 24 réceptacles de buses, et/ou **en ce que** la surface de section de sortie des buses individuelles est comprise dans une plage de 0,2 à 25 mm².

8. Dispositif (1) selon au moins l'une des revendications 1 à 7, **caractérisé en ce que**, dans l'équipement de structuration (180), dans le deuxième boîtier (30), ladite au moins une ouverture (160) pour générer ledit au moins un brin de masse de base (500) présente une surface de section transversale plus grande que la surface de section transversale des ouvertures de sortie respectives (280) pour générer un brin de masse additionnelle (90), et en particulier la surface de section transversale des ouvertures de sortie respectives (280) pour générer un brin de masse additionnelle (90) est plus grande que la surface de section de sortie des buses respectives (7a, 7b, 7c) dans le premier boîtier.

9. Dispositif (1) selon au moins l'une des revendications 1 à 8, **caractérisé en ce que** ladite au moins une ouverture (160) pour générer ledit au moins un brin de masse de base (500) présente une surface de section transversale respective comprise dans une plage de 3 à 400 cm², et les canaux (190) présentent de préférence une surface de section transversale comprise dans une plage de 0,5 à 150 mm².

10. Dispositif (1) selon au moins l'une des revendications 1 à 9, **caractérisé en ce que** le dispositif (1) comprend au moins un équipement (13) pour alimenter les flux de masse additionnelle (6, 9) au premier boîtier et/ou au deuxième boîtier, comportant de préférence au moins un diviseur de flux de remplissage (14) qui divise un flux de masse additionnelle en plusieurs flux de masse additionnelle (6) dans des conduites de division correspondantes (15a, 15b, 15n, 150a, 150b, 150c), dans lequel les conduites de division (15a, 15b, 15n, 150a, 150b, 150c) sont connectées aux buses (7a, 7b, 7c) et/ou aux admissions (70a, 70b, 70c).

11. Machine de remplissage (300) comportant un dispositif (1) pour fabriquer des aliments marbrés et structurés (2) selon au moins l'une des revendications 1 à 10, dans laquelle la machine de remplissage comporte une trémie (17), un convoyeur (18), et une sortie (19) qui est connectée à l'entrée (4) du premier boîtier (3).

12. Machine de remplissage selon la revendication 11, **caractérisée en ce que** le ratio du flux de masse de base (5) alimenté au premier boîtier (3) par le flux de masse additionnelle respectif (6) alimenté aux buses (7a, 7b, 7c) dans le premier boîtier (3) est réglable, et en particulier le ratio du flux de masse de base (5) alimenté au premier boîtier (3) par le flux de masse additionnelle respectif (9) alimenté aux alimentations (70a, 70b, 70c) dans le deuxième boîtier (30) est réglable.

13. Procédé de fabrication d'aliments structurés marbrés (2), en particulier à l'aide d'une machine de remplissage (100) selon la revendication 11 ou 12, **caractérisé en ce que**
un flux de masse de base (5) est généré à travers un premier boîtier (3), et
dans le flux de masse de base (5), plusieurs flux de masse additionnelle (6) sont injectés via des buses respectives (7a, 7b, 7c), et
le flux de masse de base (50) marbré avec les flux de masse additionnelle est dirigé vers un deuxième boîtier (30) dans un équipement de structuration (180) et guidé à travers au moins une ouverture (160), générant ainsi au moins un brin de masse de base (500), et
d'autres flux de masse additionnelle (9) sont alimentés dans plusieurs admissions (70a, 70b, 70c) à l'intérieur du deuxième boîtier, générant ainsi plusieurs brins de masse additionnelle (90),
dans lequel l'équipement de structuration (180) comprend une première section (91) dans laquelle est agencée ladite au moins une ouverture (160), et
une deuxième section (100) avec plusieurs canaux (190) qui sont connectés à des admissions (70) pour les flux de masse additionnelle respectifs (9) et dirigent le flux de masse additionnelle (9) vers une position prédéterminée respective de la section transversale du boîtier, et
une troisième section (110) avec plusieurs ouvertures de sortie (280) qui sont connectées aux canaux respectifs (190) pour générer lesdits plusieurs brins de masse additionnelle (90).

14. Procédé selon la revendication 13, **caractérisé en ce que**, vu dans la direction d'écoulement, les brins de masse de base et de masse additionnelle sont agencés côte à côte dans un guide d'extrusion (130) en aval de l'équipement de structuration (180).
